# EUROPEAN PATENT SPECIFICATION

(11) **EP 4 145 343 B1**
(45) Date of publication and mention of the grant of the patent: **21.01.2026**
(21) Application number: 21797544.0
(22) Date of filing: 23.04.2021
(51) Int. Cl.: G06V 40/12, G06V 40/40

(54) **FINGERPRINT LIVENESS DETECTION METHOD AND DEVICE, AND STORAGE MEDIUM**
VERFAHREN UND VORRICHTUNG ZUR ERKENNUNG VON FINGERABDRUCKLEBENDIGKEIT UND SPEICHERMEDIUM
PROCÉDÉ ET DISPOSITIF DE DÉTECTION D'ÉTAT VIVANT D'EMPREINTE DIGITALE, ET SUPPORT DE STOCKAGE

(30) Priority: 30.04.2020 CN 202010364403
(43) Date of publication of application: 08.03.2023
(73) Proprietor: Hangzhou Hikvision Digital Technology Co., Ltd., Hangzhou, Zhejiang 310051 (CN)
(72) Inventor: WANG, Shengguo, Hangzhou, Zhejiang 310051 (CN); HE, Yueming, Hangzhou, Zhejiang 310051 (CN); REN, Zhihao, Hangzhou, Zhejiang 310051 (CN); ZHANG, Yunsheng, Hangzhou, Zhejiang 310051 (CN)
(74) Representative: Vogelbruch, Keang
(86) International application number: PCT/CN2021/089361
(87) International publication number: WO 2021/218823

(56) References cited:
- CN-A- 104 392 227
- CN-A- 106 295 555
- CN-A- 108 549 884
- CN-A- 110 765 857
- US-A1- 2015 254 495
- US-A1- 2018 137 329
- US-B2- 7 668 350
- SPARK: "How to Improve Exposure with Histograms", 24 June 2018 (2018-06-24), pages 1 - 9, XP093075019, Retrieved from the Internet <URL:https://photographyspark.com/how-to-improve-exposure-with-histograms/> [retrieved on 20230821]

## Description

### TECHNICAL FIELD

Embodiments of the present application relate to the field of security technologies, and in particular to fingerprint liveness detection methods and devices, and storage media.

### BACKGROUND

At present, fingerprint identification has important applications in many scenarios, such as attendance, access control, computer unlocking, mobile phone unlocking, payment and other scenarios. Fingerprint identification mainly performs the extraction of fingerprint image features, for example, ridges, dots, crossover points, etc., to determine whether a fingerprint is valid. However, the current fingerprint forgery technology has developed as well, for example, by making a fingerprint membrane with silicone to forge other people's fingerprints, some illegal acts may be successfully carried out through spoofing fingerprint identification. To ensure the security of fingerprint identification, it is expected to add fingerprint liveness detection on the basis of fingerprint identification, so as to effectively prevent spoofing other people's fingerprints with the fingerprint membrane.

In some examples, whether a fingerprint is of a real human can be determined according to a skin temperature or a skin capacitance value. However, in general, the skin temperature and the skin capacitance value are relatively stable, evildoers can easily forge a fingerprint membrane with the same skin temperature or capacitance value, and thus successfully spoof the fingerprint liveness detection. Therefore, this manner is still less secure.

US 7668350B2 provides methods of evaluating the genuineness of a sample presented for biometric evaluation. The sample is illuminated under distinct optical conditions. Light scattered from the sample is received. Multiple images are formed, each image being formed from the received light for one of the optical conditions. A set of texture measures is generated, each texture measure being generated from one of the images. It is determined whether the generated texture measures are consistent with the sample being authentic unconcealed biological tissue.

### SUMMARY

The invention is set out in the appended set of claims. In embodiments of the present application, a fingerprint liveness detection method and device, and a storage medium are provided, which can improve the security of the fingerprint liveness detection method. The technical solution is as follows:

According to an aspect, a fingerprint liveness detection is provided. The method includes:
acquiring a first fingerprint image and a second fingerprint image, where the first fingerprint image and the second fingerprint image refer to images of a same fingerprint, the first fingerprint image indicates a red channel image and the second fingerprint image indicates a blue channel image;
performing zone division on the first fingerprint image and the second fingerprint image, where the divided first fingerprint image includes a plurality of first estimated bright zones and a plurality of first estimated dark zones, and the divided second fingerprint image includes a plurality of second estimated bright zones and a plurality of second estimated dark zones;
determining, according to the plurality of first estimated bright zones, the plurality of first estimated dark zones, the plurality of second estimated bright zones and the plurality of second estimated dark zones, a feature vector for multi-zone grayscale distribution; and
obtaining a fingerprint liveness detection result by inputting the feature vector for multi-zone grayscale distribution into a fingerprint liveness detection model, where the fingerprint liveness detection model is trained according to live fingerprint sample images and fake fingerprint sample images through supervised learning.

Optionally, the acquiring the first fingerprint image and the second fingerprint image includes:
acquiring a first original image, where the first original image includes an image of the fingerprint collected in a case that a green light is off and a red light and a blue light are on;
generating the first fingerprint image by extracting image data of one or more red channels from the first original image; and
generating the second fingerprint image by extracting image data of one or more blue channels from the first original image.

Optionally, the acquiring the first fingerprint image and the second fingerprint image includes:
acquiring a second original image and a third original image, where the second original image includes an image of the fingerprint collected in a case that a red light is on and a green light and a blue light are off, and the third original image includes an image of the fingerprint collected in a case that the blue light is on and the red light and the green light are off;
generating the first fingerprint image by extracting image data of one or more red channels from the second original image; and
generating the second fingerprint image by extracting image data of one or more blue channels from the third original image.

Optionally, the performing zone division on the first fingerprint image and the second fingerprint image includes:
determining a zone parameter according to a distribution pattern of bright and dark zones in red channel images and blue channel images of living fingerprints, where the zone parameter includes a plurality of zone width ratios; and
performing, according to the plurality of zone width ratios, zone division on the first fingerprint image and the second fingerprint image.

The first fingerprint image and the second fingerprint image have a same image size, and the determining, according to the plurality of first estimated bright zones, the plurality of first estimated dark zones, the plurality of second estimated bright zones and the plurality of second estimated dark zones, the feature vector for multi-zone grayscale distribution includes:
determining a first grayscale feature vector according to the plurality of first estimated bright zones and the plurality of second estimated dark zones;
determining a second grayscale feature vector according to the plurality of first estimated dark zones and the plurality of second estimated bright zones; and
generating, according to the first grayscale feature vector and the second grayscale feature vector, the feature vector for multi-zone grayscale distribution.

Optionally, the determining the first grayscale feature vector according to the plurality of first estimated bright zones and the plurality of second estimated dark zones includes:
determining numbers of pixels corresponding to respective grayscale values within the plurality of first estimated bright zones, and numbers of pixels corresponding to respective grayscale values within the plurality of second estimated dark zones; and
generating the first grayscale feature vector according to the numbers of pixels corresponding to the respective grayscale values within the plurality of first estimated bright zones and the numbers of pixels corresponding to the respective grayscale values within the plurality of second estimated dark zones.

Optionally, the determining the second grayscale feature vector according to the plurality of first estimated dark zones and the plurality of second estimated bright zones includes:
determining numbers of pixels corresponding to respective grayscale values within the plurality of first estimated dark zones, and numbers of pixels corresponding to respective grayscale values within the plurality of second estimated bright zones; and
generating the second grayscale value feature vector according to the numbers of pixels corresponding to the respective grayscale values within the plurality of first estimated dark zones and the numbers of pixels corresponding to the respective grayscale values within the plurality of second estimated bright zones.

Optionally, before determining the first grayscale feature vector according to the plurality of first estimated bright zones and the plurality of second estimated dark zones, the method further includes:
obtaining a grayscale value counting range, where the grayscale value counting range is determined according to an exposure parameter of an image collecting device that collects an image of the fingerprint; and
the determining the first grayscale feature vector according to the plurality of first estimated bright zones and the plurality of second estimated dark zones includes:
determining, according to the grayscale value counting range, numbers of pixels corresponding to respective grayscale values within the grayscale value counting range for the plurality of first estimated bright zones, and numbers of pixels corresponding to respective grayscale values within the grayscale value counting range for the plurality of second estimated dark zones; and
generating the first grayscale feature vector according to the numbers of pixels corresponding to the respective grayscale values within the grayscale value counting range for the plurality of first estimated bright zones and the numbers of pixels corresponding to the respective grayscale values within the grayscale value counting range for the plurality of second estimated dark zones.

Optionally, the generating, according to the first grayscale feature vector and the second grayscale feature vector, the feature vector for multi-zone grayscale distribution includes:
generating, by performing splicing on the first grayscale value feature vector and the second grayscale value feature vector, the feature vector for multi-zone grayscale distribution

Optionally, before obtaining the fingerprint liveness detection result by inputting the feature vector for multi-zone grayscale distribution into the fingerprint liveness detection model, the method further includes:
acquiring the live fingerprint sample images and the fake fingerprint sample images, where the live fingerprint sample images include sample images of a plurality of living fingerprints collected in a case that a green light is off, a red light and a blue light are on, and the fake fingerprint sample images include sample images of a plurality of non-living fingerprints collected in a case that the green light is off, the red light and the blue light are on; and
obtaining the fingerprint liveness detection model by performing training based on the live fingerprint sample images and the fake fingerprint sample images through supervised learning.

Optionally, the method further includes:
acquiring a fourth original image, where the fourth original image includes an image of the fingerprint collected in a case that a green light is on;
determining a fingerprint identification result according to the fourth original image; and
determining a security verification result according to the fingerprint identification result and the fingerprint liveness detection result.

In another aspect, a fingerprint liveness detection device is provided. The device includes:
a first acquiring module, configured to acquire a first fingerprint image and a second fingerprint image, where the first fingerprint image and the second fingerprint image refer to images of a same fingerprint, the first fingerprint image indicates a red channel image and the second fingerprint image indicates a blue channel image;
a zone dividing module, configured to perform zone division on the first fingerprint image and the second fingerprint image, where the divided first fingerprint image includes a plurality of first estimated bright zones and a plurality of first estimated dark zones, and the divided second fingerprint image includes a plurality of second estimated bright zones and a plurality of second estimated dark zones;
a first determining module, configured to determine, according to the plurality of first estimated bright zones, the plurality of first estimated dark zones, the plurality of second estimated bright zones and the plurality of second estimated dark zones, a feature vector for multi-zone grayscale distribution; and
a detecting module, configured to obtain a fingerprint liveness detection result by inputting the feature vector for multi-zone grayscale distribution into a fingerprint liveness detection model, where the fingerprint liveness detection model is trained according to live fingerprint sample images and fake fingerprint sample images through supervised learning.

Optionally, the first acquiring module includes:
a first acquiring unit, configured to acquire a first original image, where the first original image includes an image of the fingerprint collected in a case that a green light is off and a red light and a blue light are on;
a first extracting unit, configured to generate the first fingerprint image by extracting image data of one or more red channels from the first original image; and
a second extracting unit, configured to generate the second fingerprint image by extracting image data of one or more blue channels from the first original image.

Optionally, the first acquiring module includes:
a second acquiring unit, configured to acquire a second original image and a third original image, where the second original image includes an image of the fingerprint collected in a case that a red light is on and a green light and a blue light are off, and the third original image includes an image of the fingerprint collected in a case that the blue light is on and the red light and the green light are off;
a third extracting unit, configured to generate the first fingerprint image by extracting image data of one or more red channels from the second original image; and
a fourth extracting unit, configured to generate the second fingerprint image by extracting image data of one or more blue channels from the third original image.

Optionally, the zone dividing module includes
a first determining unit, configured to determine a zone parameter according to a distribution pattern of bright and dark zones in red channel images and blue channel images of living fingerprints, where the zone parameter includes a plurality of zone width ratios; and
a zone dividing unit, configured to perform, according to the plurality of zone width ratios, zone division on the first fingerprint image and the second fingerprint image.

Optionally, the first fingerprint image and the second fingerprint image have a same image size, and the first determining module includes:
a second determining unit, configured to determine a first grayscale feature vector according to the plurality of first estimated bright zones and the plurality of second estimated dark zones;
a third determining unit, configured to determine a second grayscale feature vector according to the plurality of first estimated dark zones and the plurality of second estimated bright zones; and
a generating unit, configured to generate, according to the first grayscale feature vector and the second grayscale feature vector, the feature vector for multi-zone grayscale distribution.

Optionally, the second determining unit includes
a first determining sub-unit, configured to determine numbers of pixels corresponding to respective grayscale values within the plurality of first estimated bright zones, and numbers of pixels corresponding to respective grayscale values within the plurality of second estimated dark zones; and
a first generating sub-unit, configured to generate the first grayscale feature vector according to the numbers of pixels corresponding to the respective grayscale values within the plurality of first estimated bright zones and the numbers of pixels corresponding to the respective grayscale values within the plurality of second estimated dark zones.

Optionally, the third determining unit includes
a second determining sub-unit, configured to determine numbers of pixels corresponding to respective grayscale values within the plurality of first estimated dark zones, and numbers of pixels corresponding to respective grayscale values within the plurality of second estimated bright zones; and
a second generating sub-unit, configured to generate the second grayscale value feature vector according to the numbers of pixels corresponding to the respective grayscale values within the plurality of first estimated dark zones and the numbers of pixels corresponding to the respective grayscale values within the plurality of second estimated bright zones.

Optionally, the first determining module further includes
a third acquiring unit, configured to obtain a grayscale value counting range, where the grayscale value counting range is determined according to an exposure parameter of an image collecting device that collects an image of the fingerprint; and
the second determining unit includes
   a third determining sub-unit, configured to determine, according to the grayscale value counting range, numbers of pixels corresponding to respective grayscale values within the grayscale value counting range for the plurality of first estimated bright zones, and numbers of pixels corresponding to respective grayscale values within the grayscale value counting range for the plurality of second estimated dark zones; and
   a third generating sub-unit, configured to generate the first grayscale feature vector according to the numbers of pixels corresponding to the respective grayscale values within the grayscale value counting range for the plurality of first estimated bright zones and the numbers of pixels corresponding to the respective grayscale values within the grayscale value counting range for the plurality of second estimated dark zones.

Optionally, the generating unit includes
a splicing sub-unit, configured to generate, by performing splicing on the first grayscale value feature vector and the second grayscale value feature vector, the feature vector for multi-zone grayscale distribution.

Optionally, the device further includes
a second acquiring module, configured to acquire the live fingerprint sample images and the fake fingerprint sample images, where the live fingerprint sample images include sample images of a plurality of living fingerprints collected in a case that a green light is off, a red light and a blue light are on, and the fake fingerprint sample images include sample images of a plurality of non-living fingerprints collected in a case that the green light is off, the red light and the blue light are on; and
a training module, configured to obtain the fingerprint liveness detection model by performing training based on the live fingerprint sample images and the fake fingerprint sample images through supervised learning.

Optionally, the device further includes
a third acquiring module, configure to acquire a fourth original image, where the fourth original image includes an image of the fingerprint collected in a case that a green light is on;
an identifying module, configure to determine a fingerprint identification result according to the fourth original image; and
a second determining module, configure to determine a security verification result according to the fingerprint identification result and the fingerprint liveness detection result.

In another aspect, a fingerprint liveness detection device is provided. The device includes an image collector and a processor, where the image collector includes a light supplementary lamp and an image sensor;
the image collector is configured to collect a first original image;
the light supplementary lamp is configured to turn off a green light and turn on a red light and a blue light to supplement light for the image sensor during collecting the first original image; and
the processor is configured to acquire a first fingerprint image and a second fingerprint image by processing the first original image, where the first fingerprint image indicates a red channel image and the second fingerprint image indicates a blue channel image; perform zone division on the first fingerprint image and the second fingerprint image, where the divided first fingerprint image includes a plurality of first estimated bright zones and a plurality of first estimated dark zones, and the divided second fingerprint image includes a plurality of second estimated bright zones and a plurality of second estimated dark zones; determine, according to the plurality of first estimated bright zones, the plurality of first estimated dark zones, the plurality of second estimated bright zones and the plurality of second estimated dark zones, a feature vector for multi-zone grayscale distribution; and obtain a fingerprint liveness detection result by inputting the feature vector for multi-zone grayscale distribution into a fingerprint liveness detection model, where the fingerprint liveness detection model is trained according to live fingerprint sample images and fake fingerprint sample images through supervised learning.

Optionally, the image collector is further configured to collect a fourth original image;
the light supplementary lamp is further configured to turn on the green light to supplement light for the image sensor during collecting the fourth original image; and
the processor is further configured to determine a fingerprint identification result according to the fourth original image; and determine a security verification result according to the fingerprint identification result and the fingerprint liveness detection result.

In another aspect, a computer readable storage medium is provided, where the computer readable storage medium stores a computer program, and the computer program is executed by a processor to implement steps of the fingerprint liveness detection method described above.

In another aspect, a computer program product including instructions is provided, when the computer program product is executed on a computer, the computer is caused to implement steps of the fingerprint liveness detection method described above.

The technical solutions provided in the embodiments of the present application may bring at least the following beneficial effects.

In the embodiments of the present application, zone division can be performed on the first fingerprint image and the second fingerprint image, and a feature vector for multi-zone grayscale distribution can be determined according to the divided zones, so as to perform fingerprint liveness detection through a fingerprint liveness detection model. The first fingerprint image indicates a red channel image and the second fingerprint image indicates a blue channel image. For a non-living one's fingerprint, a grayscale value distribution pattern for zones within these two channel images is different from that of a living one's fingerprint. Therefore, through the feature vector for multi-zone grayscale distribution, whether grayscale distribution feature(s) of a living one's fingerprint exists in a fingerprint image can be determined, and further whether the fingerprint is of a living one can be determined, which is more secure.

### BRIEF DESCRIPTION OF THE DRAWINGS

In order to more clearly illustrate the technical solutions in embodiments of the present application, accompanying drawings to be referred in the embodiments will be briefly introduced below. Apparently, the accompanying drawings in the following description merely show some embodiments of the present application. For those of ordinary skill in the art, other drawings can be obtained based on these drawings without creative endeavor.
FIG. 1 is a structural schematic diagram illustrating a fingerprint liveness detection device provided by one or more embodiments of the present application;
FIG. 2 is a flowchart illustrating a fingerprint liveness detection method provided by one or more embodiments of the present application;
FIG. 3 is a schematic diagram illustrating an image sensor used in one or more embodiments of the present application;
Fig. 4 is a schematic diagram illustrating extracted image data of red channels provided by one or more embodiments of the present application;
FIG. 5 is a schematic diagram illustrating a first fingerprint image provided by one or more embodiments of the present application;
Fig. 6 is a schematic diagram illustrating extracted image data of blue channels provided by one or more embodiments of the present application;
FIG. 7 is a schematic diagram illustrating a second fingerprint image provided by one or more embodiments of the present application;
FIG. 8 is a schematic diagram illustrating determining zones in images provided by one or more embodiment of the present application;
FIG. 9 is a flowchart illustrating another fingerprint liveness detection method provided by one or more embodiments of the present application;
FIG. 10 is a structural schematic diagram illustrating a fingerprint liveness detection device provided by one or more embodiments of the present application;
FIG. 11 is a structural schematic diagram illustrating another fingerprint liveness detection device provided by one or more embodiments of the present application; and
FIG. 12 is a structural schematic diagram illustrating a computer device provided by one or more embodiments of the present application.

### DETAILED DESCRIPTION OF THE EMBODIMENTS

To make the purposes, technical solutions and advantages of the embodiments of the present application clearer, the embodiments of the present application will be further described in detail below in conjunction with the accompanying drawings.

At present, fingerprint identification has important applications in many scenarios, such as attendance, access control, computer unlocking, mobile phone unlocking, payment and other scenarios. However, the current fingerprint forgery technology has developed as well, for example, by making a fingerprint membrane with silicon to forge other people's fingerprints, some illegal acts may be successfully carried out through spoofing fingerprint identification. To ensure the security of fingerprint identification, it is expected to add fingerprint liveness detection on the basis of fingerprint identification, so as to effectively prevent spoofing other people's fingerprints with the fingerprint membrane. For fingerprint images collected in various scenarios, with the methods provided in the embodiments of the present application, fingerprint liveness detection can be performed to obtain a fingerprint liveness detection result. On this basis, fingerprint identification can be performed on the collected fingerprint images to obtain a fingerprint identification result. In response to determining that both the fingerprint identification result indicates a valid fingerprint and the fingerprint liveness detection result indicates a live human, the security verification is determined to be passed.

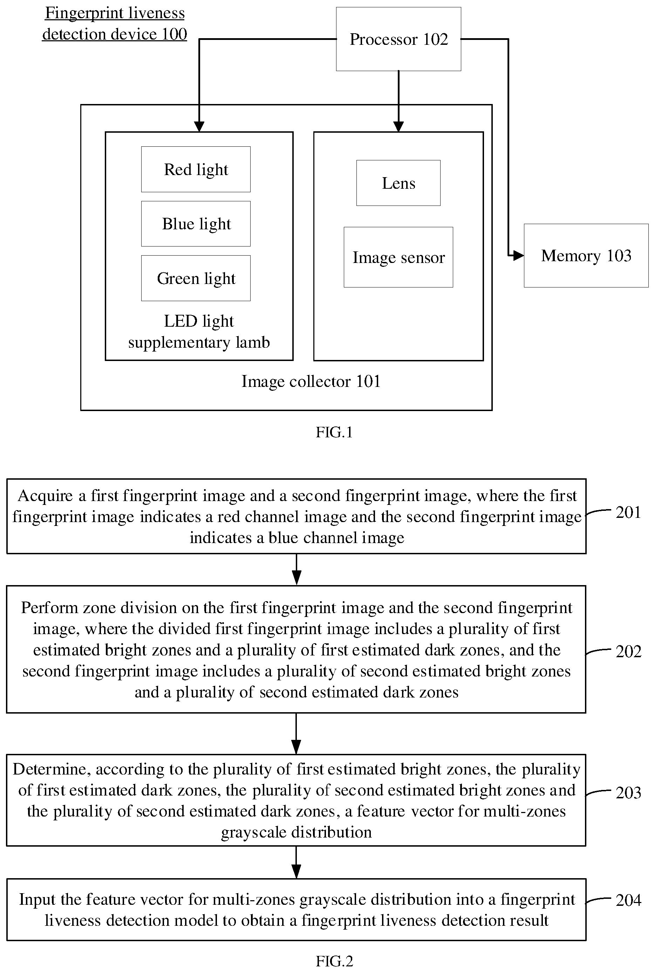

FIG. 1 is a structural schematic diagram illustrating a fingerprint liveness detection device 100 provided by one or more embodiments of the present application. Referring to FIG. 1, the fingerprint liveness detection device 100 includes an image collector 101 and a processor 102. The image collector 101 can include a LED (Light Emitting Diode) light supplement lamp, a lens and an image sensor. The LED light supplement lamp can include a green light, a red light and a blue light.

The image collector 101 is used to receive an optical signal or sense capacitance, convert the received optical signal or sensed capacitance into an electrical signal, and send the electrical signal to the processor 102. The processor 102 is used to determine, according to the received electrical signal, a current light intensity variation or a capacitance value. In a case that the light intensity variation indicates that the current light is significantly darkened or the capacitance value indicates a capacitance value of a living one's finger, the processor 102 sends a control command for collecting a fingerprint image to the image collector 101, that is, waking up the image collector 101 to perform fingerprint collection.

In response to receiving the control command, the image collector 101 controls the LED light supplementary lamp, according to the fingerprint image collecting manners provided in the embodiments of the application, to turn on the green light or to turn on the red light and the blue light for supplementing light to the image sensor. An original image can be collected by the lens and the image sensor, and the collected original image is sent to the processor 102, where a fingerprint liveness detection model can be deployed. The processor 102 can process the original image according to the fingerprint liveness detection methods provided in the embodiments of the present application to obtain a fingerprint liveness detection result. The fingerprint liveness detection model can be trained based on live fingerprint sample images and fake fingerprint sample images through supervised learning.

In the embodiments of the present application, the image collector 101 collects a first original image, and during collecting the first original image, the LED light supplementary lamp can turn off the green light and turn on the red light and the blue light for supplementing light to the image sensor. The processor 102 processes the first original image to obtain a first fingerprint image and a second fingerprint image, where the first fingerprint image indicates a red channel image and the second fingerprint image indicates a blue channel image. The processor 102 performs zone division on the first fingerprint image and the second fingerprint image, where the divided first fingerprint image includes a plurality of first estimated bright zones and a plurality of first estimated dark zones, and the divided second fingerprint image includes a plurality of second estimated bright zones and a plurality of second estimated dark zones. The processor 102 further determines, according to the plurality of first estimated bright zones, the plurality of first estimated dark zones, the plurality of second estimated bright zones and the plurality of second estimated dark zones, a feature vector for multi-zone grayscale distribution. The processor 102 inputs the feature vector for multi-zone grayscale distribution into a fingerprint liveness detection model to obtain a fingerprint liveness detection result.

Optionally, the image collector 101 can collect a fourth original image as well, and during collecting the fourth original image, the LED light supplementary lamp can turn on the green light for supplementing light to the image sensor. The processor 102 can determine a fingerprint identification result according to the fourth original image, and determine a security verification result according to the fingerprint identification result and the fingerprint liveness detection result.

In the embodiments of the present application, the fingerprint liveness detection device 100 may further include a memory 103. The memory 103 stores data and computer programs for fingerprint identification used by the embodiments of the present application, for example, images of a plurality of valid fingerprints are stored. For performing the fingerprint identification, the processor 102 can execute the computer programs in the memory 103 to compare a collected original image with the stored images of the plurality of valid fingerprints, thereby obtaining a fingerprint identification result. Finally, a security verification result can be determined based on the fingerprint liveness detection result and the fingerprint identification result.

It should be noted that, for specific implementations of the LED light supplementary lamp supplementing light to the image sensor for collecting original images, and the processor 102 processing the original images to obtain a fingerprint liveness detection result or a fingerprint identification result, reference may be made to the related descriptions of the method embodiments in FIG. 2 below.

Optionally, in the embodiments of the present application, the LED light supplementary lamp may include a red light, a green light and a blue light. Wavelength ranges of red light, green light and blue light corresponding to these three kinds of lights can be determined according to a QE (Quantum Efficiency) curve of the image sensor. For example, in a case that only the red light is turned on, a value in the QE curve of the image sensor reaches the maximum, e.g., a peak value, and a wavelength corresponding to the peak value can be taken as a central wavelength of red light. A wavelength range from the central wavelength to the left and a wavelength range from the central wavelength to the right can be taken as a wavelength range of red light. In the embodiments of the present application, being determined according to this manner, a wavelength range of green light may be 500 nm-550 nm, a wavelength range of red light may be 600 nm-650 nm, and a wavelength range of blue light may be 420 nm-480 nm. These ranges are only used as an example, and in practical applications, wavelength ranges finally determined may vary with devices.

It should be noted that the fingerprint liveness detection device 100 shown in FIG. 1 may refer to an image collecting device at front-end, for example, a camera. That is, the fingerprint liveness detection methods provided in the embodiments of the present application can be applied to an image collecting device at front-end. In a possible implementation, functions of the above-mentioned fingerprint liveness detection device 100 can further be implemented by two independent devices of a front-end device and a back-end device, where the back-end device can be wired or wirelessly connected to the front-end device for data transmission. In this case, the front-end device may include the image collector 101 in the above-mentioned embodiments for collecting an original image, and the front-end device may send the collected original image to the back-end device. The back-end device can perform detection and identification, using the fingerprint liveness detection methods provided by the embodiments of the application, on the collected original image to finally determine a security verification result. The security verification result can be sent to the front-end device or other devices, and the users are prompted with texts or voices that the security verification has passed or failed.

In summary, in the embodiments of the present application, zone division can be performed on the first fingerprint image and the second fingerprint image, and feature vector(s) for multi-zone grayscale distribution can be determined according to the divided zones, so as to perform fingerprint liveness detection through a fingerprint liveness detection model. The first fingerprint image is a red channel image, and the second fingerprint image is a blue channel image. For a non-living one's fingerprint, a grayscale value distribution pattern for dark zones and bright zones within these two channel images is different from that of a living one's fingerprint. Therefore, through the feature vector for multi-zone grayscale distribution, whether grayscale distribution feature(s) of a living one's fingerprint exists in a fingerprint image can be determined, and further whether the fingerprint is of a living one (a live person present at the point of collection) can be determined, which is more secure.

It should be noted that while performing detection on a fingerprint, for the fingerprint liveness detection devices provided in the above-mentioned embodiments, the above-mentioned division of functional modules or components is taken as an example for description. In practice, the above-mentioned functions can be assigned to and completed by different functional modules or components as needed, i.e., the internal structure of the devices may be divided into different functional modules or components to complete all or part of the functions described above. In addition, the fingerprint liveness detection devices provided by the above-mentioned embodiments can belong to a same concept as the following fingerprint liveness detection method embodiments, and their specific implementation are detailed in the following method embodiments, which are not repeated herein.

In the following, the fingerprint liveness detection methods provided by the embodiments of the present application can be explained in detail.

FIG. 2 is a flowchart illustrating a fingerprint liveness detection method provided by one or more embodiments of the present application, and the method being applied to the fingerprint liveness detection device shown in FIG. 1 is taken as an example for description. Refer to FIG. 2, the method includes the following steps.

At step 201, a first fingerprint image and a second fingerprint image are acquired, where the first fingerprint image indicates a red channel image and the second fingerprint image indicates a blue channel image.

For a living one's fingerprint, bright zones and dark zones are distributed alternately in a red channel image and a blue channel image thereof, and grayscale value distribution of pixels is relatively regular. However, for a non-living one's fingerprint, grayscale value distribution of pixels for the two channel images is chaotic. That is, a distribution pattern of grayscale values corresponding to the non-living one's fingerprint is different from that of the living one's fingerprint. Therefore, fingerprint liveness detection can be performed according to the distribution pattern of grayscale values. In the embodiments of the present application, the acquired first fingerprint image indicates a red channel image, the second fingerprint image indicates a blue channel image, and the first fingerprint image and the second fingerprint image refer to images of the same fingerprint.

As can be seen from the above-mentioned introduction related to FIG. 1, before collecting a fingerprint image, the image collector is to be woken up first. Whether a collection object, for example, a finger, is currently detected can be determined according to a light intensity variation or a capacitance value. In response to detecting the collection object, the image collector can be woken up to start collecting a fingerprint image.

In the embodiments of the present application, since fingerprint liveness detection is performed according to a red channel image and a blue channel image, based on this, the embodiments of the present application provide two image collecting manners, that is, providing two implementations of acquiring the first fingerprint image and the second fingerprint image. The two implementations are introduced in the following.

In a first implementation, the fingerprint liveness detection device can acquire a first original image, where the first original image can include an image of the fingerprint collected in a case that a green light is off and a red light and a blue light are on. The fingerprint liveness detection device can generate the first fingerprint image by extracting image data of one or more red channels from the first original image, and generate the second fingerprint image by extracting image data of one or more blue channels from the first original image.

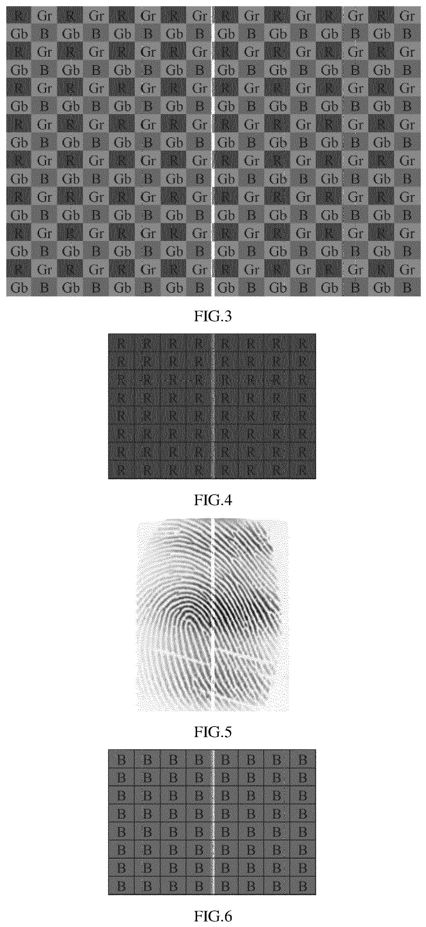

In the embodiments of the present application, the image sensor may include one or more red channels, one or more blue channels and one or more green channels. For example, the image sensor may be a Bayer color image sensor as shown in FIG. 3, where R can indicate a red (R) channel, Gr and Gb both can indicate green (G) channels and B can indicate a blue (B) channel.

When the image collector is woken up, the red light and the blue light can be turned on at the same time, and the first original image can be collected through the lens and the image sensor. That is, the first original image can be an image of a fingerprint collected in a state that the green light is off and the red light and the blue light are on. The image collector can send the collected original image to a processor. The processor can extract image data of one or more red channels from the first original image to generate the first fingerprint image, and extract image data of one or more blue channels to generate the second fingerprint image.

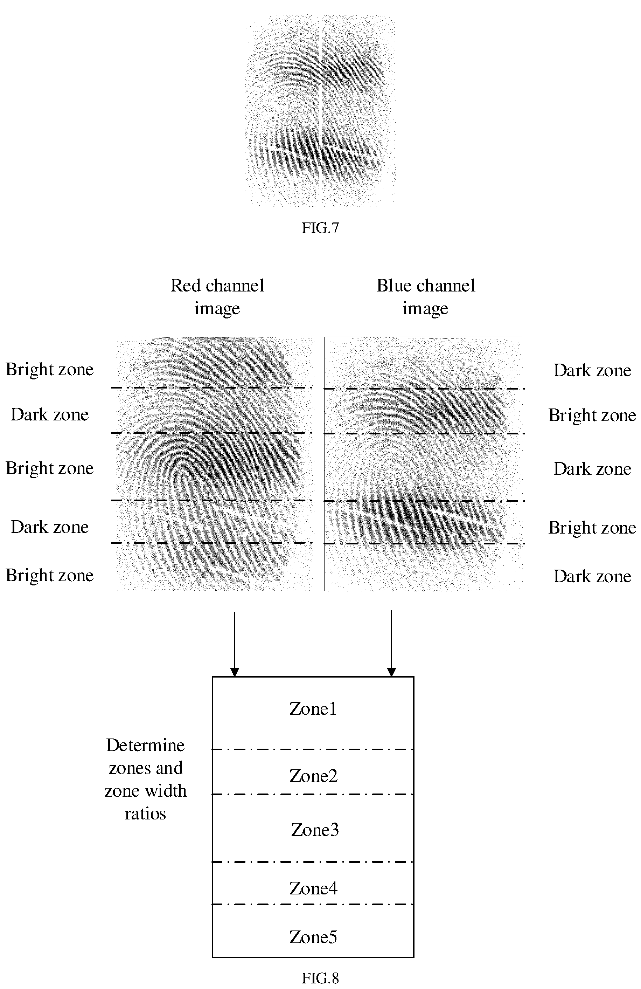

For example, taking the image sensor shown in FIG. 3 as an example, assuming that a collection object is a living one's fingerprint and a size of the first original image is w0*h0, where w0 and h0 may represent a width and height of the first original image respectively, and may also represent the number of pixels in a width direction and a height direction respectively. The processor can extract image data of R channel(s) to obtain red channel image data as shown in FIG. 4, and generate a first fingerprint image as shown in FIG. 5 according to the red channel image data. The processor can extract image data of B channel(s) to obtain blue channel image data as shown in FIG. 6, and generate a second fingerprint image shown in FIG. 7 according to the blue channel image data. Image sizes of both the first and second fingerprint images are w0*h0/4.

In a second implementation, the fingerprint liveness detection device can acquire a second original image and a third original image, where the second original image can include an image of the fingerprint collected in a case that a red light is on and a green light and a blue light are off, and the third original image can include an image of the fingerprint collected in a case that the blue light is on and the red light and the green light are off. The fingerprint liveness detection device can generate the first fingerprint image by extracting image data of one or more red channels from the second original image, and generate the second fingerprint image by extracting image data of one or more blue channels from the third original image.

In the second implementation, a first piece of an original image is collected by only turning on the red light, and a second piece of an original image is collected by only turning on the blue light. Further, the image data of the one or more red channels is extracted from the first piece of the original image to generate the first fingerprint image, and the image data of the one or more blue channels is extracted from the second piece of the original image to generate the second fingerprint image. For the manner of extracting image data, reference may be made to the relevant introduction in the first implementation, which is not repeated here.

It should be noted that, in the second implementation, the two original images are collected by only turning on the red light or the blue light, so as to avoid, in a case that both the red light and the blue light are turned on at the same time, the effect of the red light on the one or more blue channels and the effect of the blue light on the one or more red channels. While, in the first implementation, the original image is collected by turning off the green light and turning on the red light and the blue light at the same time, which can reduce image capture time compared with the second implementation.

Optionally, since distortion may exist at edges of the collected fingerprint image, the fingerprint liveness detection device may perform, when image data of the one or more red channels and image data of the one or more blue channels are extracted, distortion correction on the red channel image and the blue channel image. In addition, the fingerprint liveness detection device can further crop the red channel image and the blue channel image according to a predetermined image size parameter, so as to discard portions related to unclear edges and obtain the first fingerprint image and the second fingerprint image with the same image size.

At step 202, zone division is performed on the first fingerprint image and the second fingerprint image, where the divided first fingerprint image includes a plurality of first estimated bright zones and a plurality of first estimated dark zones, and the divided second fingerprint image includes a plurality of second estimated bright zones and a plurality of second estimated dark zones.

In the embodiments of the present application, the fingerprint liveness detection device performs zone division on the first fingerprint image and the second fingerprint image according to a distribution pattern of bright zones and dark zones in a red channel image and a blue channel image of a living one's fingerprint. The first fingerprint image can be divided into a plurality of first estimated bright zones and a plurality of first estimated dark zones, and the second fingerprint image can be divided into a plurality of second estimated bright zones and a plurality of second estimated dark zones.

As can be seen from the first fingerprint image shown in FIG. 5 and the second fingerprint image shown in FIG. 7, the distribution pattern of bright zones and dark zones in a red channel image from top to bottom along an image height direction can be: bright, dark, bright, dark and bright. The distribution pattern of bright zones and dark zones in a blue channel image from top to bottom along the image height direction can be: dark, bright, dark, bright and dark. That is, both the red channel image and the blue channel image show a distribution pattern of alternating bright and dark. The fingerprint liveness detection device can perform zone division on the first fingerprint image and the second fingerprint image according to the distribution pattern.

In the embodiments of the present application, the fingerprint liveness detection device can determine a zone parameter according to a distribution pattern of bright and dark zones in red channel images and blue channel images of living fingerprints, where the zone parameter includes a plurality of zone width ratios; and perform, according to the plurality of zone width ratios, zone division on the first fingerprint image and the second fingerprint image.

It should be noted that the zone parameter may be a parameter set in advance according to the distribution pattern of zones. For example, bright-dark distribution for red channel images and blue channel images of a plurality of living fingerprints can be counted. For each of the red channel images and blue channel images of the plurality of living fingerprints, according to the bright-dark distribution, a total number of bright zones and dark zones in the image can be determined. For each bright zone or each dark zone, a width portion of the bright zone or the dark zone can be obtained from a ratio of a height of the bright or dark zone to a height of the image, where zones can be arranged from top to bottom on the image. The zone parameter is set in the fingerprint liveness detection device.

For example, FIG. 8 is a schematic diagram illustrating determining zones in images provided by one or more embodiment of the present application. Referring to FIG. 8, an upper left picture in FIG. 8 can be a red channel image of a living fingerprint, e.g., the first fingerprint image, and an upper right picture can be a blue channel image of the living fingerprint, e.g., the second fingerprint image. Both the red channel image and the blue channel image show a distribution pattern of alternating bright and dark, and the red channel image and the blue channel image can be divided into 5 zones from top to bottom. The 5 zones included in the red channel image can be a bright zone, a dark zone, a bright zone, a dark zone and a bright zone from top to bottom, and the 5 zones included in the blue channel image can be a dark zone, a bright zone, a dark zone, a bright zone and a dark zone from top to bottom. The 5 zones in the red channel image correspond to the 5 zones in the blue channel image one by one, that is, corresponding zones in the two images have the same width ratio. The difference is that, for a bright zone in the red channel image, a corresponding zone with the same height in the blue channel image is a dark zone. Combining the distribution of bright and dark zones in the red channel image and the blue channel image, it can be concluded that both the blue channel image and the red channel image can be divided into five zones as shown in FIG. 8 with a same division rule, which are zone 1, zone 2, zone 3, zone 4 and zone 5. Zone width ratios corresponding to the five zones may be, as shown in FIG. 8, for example, from top to bottom, 20/66, 10/66, 15/66, 9/66 and 12/66, or may be other ratios.

The fingerprint liveness detection device can perform, according to the zone width ratios shown in FIG. 8, zone division on the first fingerprint image and the second fingerprint image. The divided first fingerprint image may include 3 first estimated bright zones and 2 first estimated dark zones, where the 3 first estimated bright zones can correspond to zone 1, zone 3 and zone 5 in FIG. 8, and the 2 first estimated dark zones can correspond to zone 2 and zone 4 in FIG. 8. Similarly, the divided second fingerprint image may include 2 second estimated bright zones and 3 second estimated dark zones, where the 2 second estimated bright zones can correspond to zone 2 and zone 4 in FIG. 8, and the 3 second estimated dark zones can correspond to zone 1, zone 3 and zone 5 in FIG. 8.

Optionally, in a case that the first fingerprint image and the second fingerprint image are both of a predetermined image size, the zone parameter may include a plurality of width values. For example, assuming that a height of the predetermined image size is 66 pixels, and then width values of the 5 zones shown in FIG. 8 may be 20, 10, 15, 9 and 12 pixels from top to bottom. The fingerprint liveness detection device may perform, according to the plurality of width values, zone division on the first fingerprint image and the second fingerprint image.

At step 203, according to the plurality of first estimated bright zones, the plurality of first estimated dark zones, the plurality of second estimated bright zones and the plurality of second estimated dark zones, a feature vector for multi-zone grayscale distribution is determined.

In the embodiments of the present application, image sizes of the first fingerprint image and the second fingerprint image may be the same. When zone division is performed on the first fingerprint image and the second fingerprint image, the fingerprint liveness detection device can determine the feature vector for multi-zone grayscale distribution based on counting grayscale values of the divided zones.

In the embodiments of the present application, the fingerprint liveness detection device can determine a first grayscale feature vector according to the plurality of first estimated bright zones and the plurality of second estimated dark zones, and determine a second grayscale feature vector according to the plurality of first estimated dark zones and the plurality of second estimated bright zones. The fingerprint liveness detection device can generate the feature vector for multi-zone grayscale distribution according to the first grayscale feature vector and the second grayscale feature vector.

The fingerprint liveness detection device can determine the first grayscale feature vector and the second grayscale feature vector by counting grayscale values of zones in the first fingerprint image and the second fingerprint image.

In the embodiments of the present application, the fingerprint liveness detection device can determine numbers of pixels corresponding to respective grayscale values within the plurality of first estimated bright zones and the plurality of second estimated dark zones; and generate the first grayscale feature vector according to the numbers of pixels corresponding to the respective grayscale values within the plurality of first estimated bright zones and the plurality of second estimated dark zones. That is, the fingerprint liveness detection device can count, for each grayscale value, the numbers of pixels corresponding to the grayscale value within the plurality of first estimated bright zones in the first fingerprint image and the plurality of second estimated dark zones in the second fingerprint image separately, so as to determine the first grayscale feature vector. The plurality of first estimated bright zones and the plurality of second estimated dark zones can be in a one-to-one correspondence, and corresponding zones can indicate zones with a same height range in the two images.

For example, taking the schematic diagram of zones introduced in FIG. 8 as an example, the fingerprint liveness detection device can count, for each grayscale value within "0" to "255", the number of pixels corresponding to the grayscale value within the zone 1, zone 3 and zone 5 of the first fingerprint image. The fingerprint liveness detection device can arrange the counted numbers of pixels corresponding to respective grayscale values in an order of corresponding grayscale values from "0" to "255", thereby obtaining a vector histr1. Similarly, for each grayscale value within "0" to "255", the number of pixels corresponding to the grayscale value within the zone 1, zone 3 and zone 5 of the second fingerprint image can be counted. The counted numbers of pixels corresponding to respective grayscale values can be arranged in an order of corresponding grayscale values from "0" to "255", thereby obtaining a vector histb1. Lengths of the vector histr1 and the vector histb1 can be both 256. The vector histr1 can be added to the vector histb1 to obtain the first grayscale feature vector hisfp1, and a length of the vector hisfp1 can be 256 as well.

Similarly, the fingerprint liveness detection device can determine numbers of pixels corresponding to respective grayscale values within the plurality of first estimated dark zones and the plurality of second estimated bright zones; and generate the second grayscale feature vector according to the numbers of pixels corresponding to the respective grayscale values within the plurality of first estimated dark zones and the plurality of second estimated bright zones. That is, the fingerprint liveness detection device can count, for each grayscale value, the numbers of pixels corresponding to the grayscale value within the plurality of first estimated dark zones in the first fingerprint image and the plurality of second estimated bright zones in the second fingerprint image separately, so as to determine the second grayscale feature vector.

For example, still taking the schematic diagram of zones introduced in FIG. 8 as an example, the fingerprint liveness detection device can count, for each grayscale value within "0" to "255", the number of pixels corresponding to the grayscale value within the zone 2 and zone 4 of the first fingerprint image. The fingerprint liveness detection device can arrange the counted numbers of pixels corresponding to respective grayscale values in an order of corresponding grayscale values from "0" to "255", thereby obtaining a vector histr2. Similarly, for each grayscale value within "0" to "255", the number of pixels corresponding to the grayscale value within the zone 2 and zone 4 of the second fingerprint image can be counted. The counted numbers of pixels corresponding to respective grayscale values can be arranged in an order of corresponding grayscale values from "0" to "255", thereby obtaining a vector histb2. Lengths of the vector histr2 and the vector histb2 can be both 256. The vector histr2 can be added to the vector histb2 to obtain the second grayscale feature vector hisfp2, and a length of the vector hisfp2 can be 256 as well.

Optionally, an exposure degree while the fingerprint liveness detection device collecting an image has an impact on the collected image. In a case that the exposure degree is too high, the collected image may be too bright, and in a case that the exposure degree is too low, the collected image may be too dark. For reducing the impact of exposure and retaining effective grayscale information, a grayscale value counting range can be narrowed, that is, a grayscale value counting range can be determined according to exposure parameters of an image collecting device that collects a fingerprint image. In practical applications, exposure parameters vary with image collecting devices, and corresponding grayscale value counting ranges can be set according to exposure parameters of devices. It should be noted that, in the embodiments of the present application, the fingerprint liveness detection device may be an image collecting device. In addition, by narrowing the grayscale value counting range, the amount of computation can be reduced and the detection speed can be accelerated.

Based on the above-mentioned introduction, in the embodiments of the present application, the fingerprint liveness detection device can obtain a grayscale value counting range; determine, according to the grayscale value counting range, numbers of pixels corresponding to respective grayscale values that are within the grayscale value counting range for the plurality of first estimated bright zones and the plurality of second estimated dark zones; and generate the first grayscale feature vector according to the numbers of pixels corresponding to the respective grayscale values that are within the grayscale value counting range for the plurality of first estimated bright zones and the plurality of second estimated dark zones.

Similarly, the fingerprint liveness detection device can determine, according to the grayscale value counting range, numbers of pixels corresponding to respective grayscale values that are within the grayscale value counting range for the plurality of first estimated dark zones and the plurality of second estimated bright zones; and generate the second grayscale feature vector according to the numbers of pixels corresponding to the respective grayscale values that are within the grayscale value counting range for the plurality of first estimated dark zones and the plurality of second estimated bright zones.

That is, the fingerprint liveness detection device can only count the numbers of pixels corresponding to respective grayscale values that are within the grayscale value counting range for zones of the first fingerprint image and the second fingerprint image, and generate the first grayscale feature vector and the second grayscale feature vector according to the above-mentioned manner.

For example, the grayscale value counting range may range from "11" to "230", in this way, lengths of both the first grayscale feature vector and the second grayscale feature vector obtained according to the above-mentioned manner are 220. The vector length is reduced, which can reduce the amount of subsequent computation.

When the first grayscale feature vector and the second grayscale feature vector are acquired, the fingerprint liveness detection device can perform splicing on the first grayscale feature vector and the second grayscale feature vector, to obtain a feature vector for multi-zone grayscale distribution.

For example, the first grayscale feature vector may be hisfp1 and the second grayscale feature vector may be hisfp2. When the first grayscale feature vector and the second grayscale feature vector are spliced together, they obtained feature vector for multi-zone grayscale distribution may be [hisfp1, hisfp2].

For obtaining the feature vector for multi-zone grayscale distribution, steps of the fingerprint liveness detection device described above can include performing counting on a plurality of first estimated bright zones in the first fingerprint image and a plurality of second estimated dark zones in the second fingerprint image to obtain two vectors; obtaining the first grayscale feature vector by adding these two vectors; performing counting on a plurality of first estimated dark zones in the first fingerprint image and a plurality of second estimated bright zones in the second fingerprint image to obtain two vectors; obtaining the second grayscale feature vector by adding these two vectors; and splicing the first grayscale vector and the second grayscale vector together to obtain the feature vector for multi-zone grayscale distribution.

Optionally, in the embodiments of the present application, the fingerprint liveness detection device may also perform counting on a plurality of first estimated bright zones in the first fingerprint image to obtain a vector histr1, perform counting on a plurality of first estimated dark zones in the first fingerprint image to obtain a vector histr2, and perform splicing on the vector histr1 and the vector histr2 to obtain a first grayscale splicing vector histr. Counting can be performed on a plurality of second estimated dark zones in the second fingerprint image to obtain a vector histb1, be performed on a plurality of second estimated bright zones in the second fingerprint image to obtain a vector histb2, and splicing can be performed on the vector histb1 and the vector histb2 to obtain a second grayscale splicing vector histb. The vector histr can be added to the vector histb to obtain the feature vector for multi-zone grayscale distribution hisfp. That is, counting is performed on two images separately to obtain a grayscale splicing vector for bright and dark zones corresponding to each of the two images, and the two grayscale splicing vectors are added to obtain the feature vector for multi-zone grayscale distribution. In this way, the fingerprint liveness detection device can process one image and then another, without changing image data of the image to be counted back and forth.

It should be noted that, for steps of determining the feature vector for multi-zone grayscale distribution by counting grayscale values of zones described above, the zones can be counted in any order, and a counting order can be determined according to actual situations.

Optionally, the fingerprint liveness detection device may use a histogram to represent the above counting results as well, and determine the vectors according to the histogram.

At step 204, the feature vector for multi-zone grayscale distribution is input into a fingerprint liveness detection model to obtain a fingerprint liveness detection result.

In the embodiments of the present application, when the feature vector for multi-zone grayscale distribution is obtained, the fingerprint liveness detection device inputs the vector into a fingerprint liveness detection model to obtain a fingerprint liveness detection result.

Optionally, the fingerprint liveness detection model may be an SVM (Support Vector Machine) classifier, a neural network model, a random forest model, etc., which is not limited in the embodiments of the present application. The fingerprint liveness detection result may be "a live fingerprint" or "a fake fingerprint", or "0" or "1", where "0" may indicate a fake fingerprint and "1" may indicate a live fingerprint.

It should be noted that, in the embodiments of the present application, the fingerprint liveness detection model can be trained according to live fingerprint sample images and fake fingerprint sample images through supervised learning. The fingerprint liveness detection model can be a model trained in advance, which may be obtained by performing training on the fingerprint liveness detection device. Alternatively, the fingerprint liveness detection model may be obtained by performing training by other devices, for example, a back-end device or other computer devices, and the trained fingerprint liveness detection model can be deployed on the fingerprint liveness detection device. In the embodiments of the present application, introduction are made by taking an example that the fingerprint liveness detection model is obtained by performing training on the fingerprint liveness detection device.

In the embodiments of the present application, the fingerprint liveness detection device can acquire the live fingerprint sample images and the fake fingerprint sample images, where the live fingerprint sample images include sample images of a plurality of living fingerprints collected in a case that a green light is off, a red light and a blue light are on, and the fake fingerprint sample images include sample images of a plurality of non-living fingerprints collected in a case that the green light is off, the red light and the blue light are on. The fingerprint liveness detection device can obtain the fingerprint liveness detection model by performing training based on the live fingerprint sample images and the fake fingerprint sample images through supervised learning.

It should be noted that a manner of acquiring the live fingerprint sample images and the fake fingerprint sample images may be the same as the above-mentioned manner of acquiring the first original image, which is not repeated here.

When the live fingerprint sample images and the fake fingerprint sample images are acquired, the fingerprint liveness detection device can obtain, for each sample image, a feature vector for multi-zone grayscale distribution corresponding to the sample image according to the above-mentioned manner of acquiring a feature vector for multi-zone grayscale distribution. The fingerprint liveness detection device can perform training, based on feature vectors for multi-zone grayscale distribution corresponding to the sample images, to obtain a fingerprint liveness detection model.

Optionally, each sample image may correspond to a sample label, a sample label of a live fingerprint sample image may be "1", and a sample label of a fake fingerprint sample image may be "0". The fingerprint liveness detection device can perform training through supervised learning, based on feature vectors for multi-zone grayscale distribution and sample labels corresponding to the sample images, to obtain a fingerprint liveness detection model.

For example, assuming that the fingerprint liveness detection model is an SVM classifier, the fingerprint liveness detection device can obtain the SVM classifier by performing training through supervised learning, based on the feature vectors for multi-zone grayscale distribution and the sample labels corresponding to the sample images. The SVM classifier may be a binary classifier.

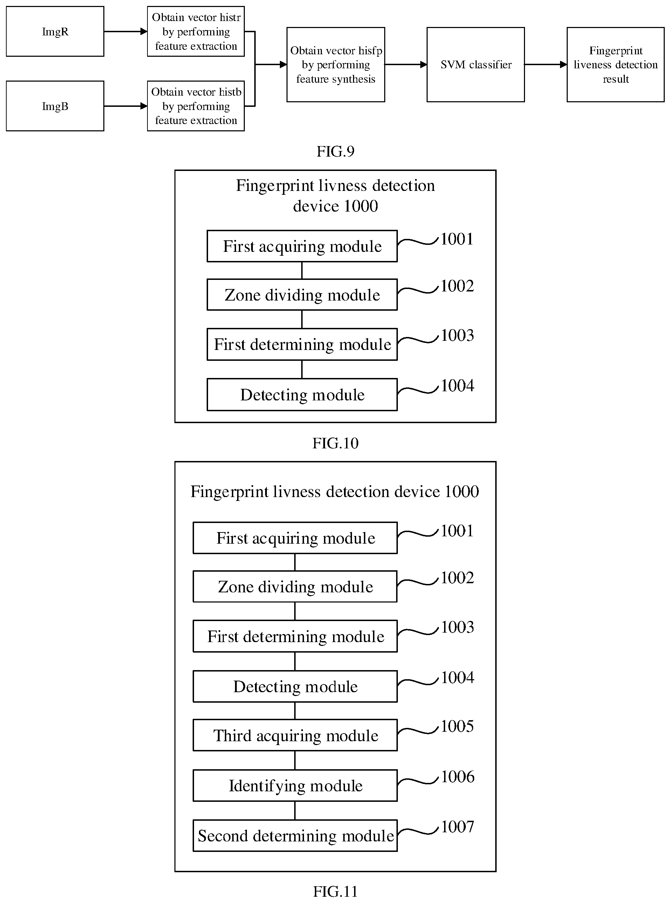

FIG. 9 is a flowchart illustrating another fingerprint liveness detection method provided by one or more embodiments of the present application. Referring to FIG. 9, assuming that the fingerprint liveness detection model is an SVM classifier. Feature extraction can be performed on the first fingerprint image (ImgR) and the second fingerprint image (ImgB) to obtain a vector histr and a vector histb, respectively. Feature synthesis can be performed, that is, the vector histr can be added to the vector histb, to obtain the feature vector for multi-zone grayscale distribution hisfp. The vector hisfp can be input into the SVM classifier to output a fingerprint liveness detection result.

In the above, the fingerprint liveness detection methods provided by the embodiments of the present application are introduced. In practical applications, fingerprint identification is expected to be combined with the fingerprint liveness detection to determine a final security verification result. That is, in response to a fingerprint identification result indicating that a collected fingerprint is a valid fingerprint, and a fingerprint liveness detection result indicating that the collected fingerprint is a live fingerprint, the security verification is determined to be passed. Based on this, the embodiments of the present application further provide a fingerprint security verification method, which will be introduced in the following.

In the embodiments of the present application, the fingerprint liveness detection device can acquire a fourth original image, where the fourth original image includes an image of the fingerprint collected in a case that a green light is on; determine a fingerprint identification result according to the fourth original image; and determine a security verification result according to the fingerprint identification result and the fingerprint liveness detection result.

For a real fingerprint, since a green channel image thereof can present relatively clear fingerprint ridges, e.g., no features of alternating bright and dark exist, thus, the green channel image is more suitable for fingerprint identification than a red channel image and a blue channel image. In addition, in a case that lights of the three colors are all turned on, a real fingerprint image collected can present clear fingerprint ridges as well, which is suitable for fingerprint identification as well. Based on this, while an image collector is woken up for fingerprint collection, not only one or two original images of a fingerprint with the red and blue lights on can be collected, but also an image of the fingerprint with the green light on can be collected to obtain a fourth original image. The green light being turned on may refer to a state in which the green light is turned on, and the red light and the blue light are turned off, or a state in which the green light, the red light and the blue light are all turned on. When the image collector is woken up, the first original image and the fourth original image can be collected to complete the capture, or the second original image, the third original image and the fourth original image can be collected to complete the capture.

In addition, when each time of collection is completed, all lights may be turned off. An order of colleting original images is not limited in the embodiments of the present application. For example, only the green light can be turned on first to collect a fourth original image, and the green light can be turned off and the red and blue lights can be turned on to collect a first original image. For another example, the green light, the red light and the blue light can be turned on first to collect a fourth original image, and the green light can be turned off, and the red light and the blue light can be kept on to collect a first original image. For another example, the red light can be turned on first to collect a second original image, the red light can be turned off and the blue light can be turned on to collect a third original image, and the blue light can be turned off and the green light can be turned on to collect a fourth original image.

When the fourth original image is acquired, the fingerprint liveness detection device may extract image data of one or more green channels from the fourth original image to generate a third fingerprint image. Fingerprint features, such as a ridge count, a fingerprint pattern, a core, a dot, a crossover, an orientation, a curvature and so on, can be extracted from the third fingerprint image. By comparing the extracted fingerprint features with features corresponding to stored images of valid fingerprints, a fingerprint identification result can be obtained. The fingerprint identification result may be "a valid fingerprint" or "an invalid fingerprint".

For extracting the image data of green channel(s) from the fourth original image to generate the third fingerprint image, implementations may refer to the above-mentioned related introductions about generating the first fingerprint image and the second fingerprint image.

For example, taking the Bayer color image sensor shown in FIG. 3 as an example, when the fourth original image is acquired, the fingerprint liveness detection device can extract image data of the Gr channel, or extract image data of the Gb channel to obtain a third fingerprint image with an image size of w0*h0/4. Optionally, the fingerprint liveness detection device can perform distortion correction on the extracted image as well, and the corrected image can be used as the third fingerprint image. Optionally, further, the fingerprint liveness detection device can crop the corrected image according to a predetermined image size parameter to obtain a clearer part in the middle, which is used as the third fingerprint image.

It should be noted that an image size of the third fingerprint image may be the same as or different from that of the first fingerprint image. In a case of being the same, a set of predetermined image size parameters can be set.

Optionally, when the fourth original image is acquired, the fingerprint liveness detection device may also directly extract fingerprint features from the fourth original image, and compare the extracted fingerprint features with features corresponding to stored images of valid fingerprints, so as to obtain a fingerprint identification result.

When the fingerprint identification result and the fingerprint liveness detection result are acquired according to the above manners, the fingerprint liveness detection device can determine a final security verification result according to the two results. For example, in a case of the fingerprint identification result indicating that a collected fingerprint is a valid fingerprint, and the fingerprint liveness detection result indicating that the collected fingerprint is a live fingerprint, the security verification is determined to be passed. In a case of the fingerprint identification result indicating that the collected fingerprint is not a valid fingerprint, or the fingerprint living detection result indicating that the collected fingerprint is not a live fingerprint, the security verification is determined to be failed. The fingerprint liveness detection device can prompt the users with a text or a sound.

In view of above, in the embodiments of the present application, zone division can be performed on the first fingerprint image and the second fingerprint image, and a feature vector for multi-zone grayscale distribution can be determined according to the divided zones, so as to perform fingerprint liveness detection through a fingerprint liveness detection model. The first fingerprint image indicates a red channel image and the second fingerprint image indicates a blue channel image. For a non-living one's fingerprint, a grayscale value distribution pattern for zones is different from that of a living one's fingerprint. Therefore, through the feature vector for multi-zone grayscale distribution, whether grayscale distribution feature(s) of a living one's fingerprint exists in a fingerprint image can be determined, and further whether the fingerprint is of a living one can be determined, which is more secure.

FIG. 10 is a structural schematic diagram illustrating a fingerprint liveness detection device 100 provided by one or more embodiments of the present application. The fingerprint liveness detection device 1000 can be implemented as part or all of a computer device by software, hardware, or a combination of both. Referring to FIG. 10, the device can include a first acquiring module 1001, a zone dividing module 1002, a first determining module 1003 and a detecting module 1004.
a first acquiring module 1001, configured to acquire a first fingerprint image and a second fingerprint image, where the first fingerprint image and the second fingerprint image refer to images of a same fingerprint, the first fingerprint image indicates a red channel image and the second fingerprint image indicates a blue channel image;
a zone dividing module 1002, configured to perform zone division on the first fingerprint image and the second fingerprint image, where the divided first fingerprint image includes a plurality of first estimated bright zones and a plurality of first estimated dark zones, and the divided second fingerprint image includes a plurality of second estimated bright zones and a plurality of second estimated dark zones;
a first determining module 1003, configured to determine, according to the plurality of first estimated bright zones, the plurality of first estimated dark zones, the plurality of second estimated bright zones and the plurality of second estimated dark zones, a feature vector for multi-zone grayscale distribution; and
a detecting module 1004, configured to obtain a fingerprint liveness detection result by inputting the feature vector for multi-zone grayscale distribution into a fingerprint liveness detection model, where the fingerprint liveness detection model is trained according to live fingerprint sample images and fake fingerprint sample images through supervised learning.

Optionally, the first acquiring module 1001 includes:
a first acquiring unit, configured to acquire a first original image, where the first original image includes an image of the fingerprint collected in a case that a green light is off and a red light and a blue light are on;
a first extracting unit, configured to generate the first fingerprint image by extracting image data of one or more red channels from the first original image; and
a second extracting unit, configured to generate the second fingerprint image by extracting image data of one or more blue channels from the first original image.

Optionally, the first acquiring module 1001 includes:
a second acquiring unit, configured to acquire a second original image and a third original image, where the second original image includes an image of the fingerprint collected in a case that a red light is on and a green light and a blue light are off, and the third original image includes an image of the fingerprint collected in a case that the blue light is on and the red light and the green light are off;
a third extracting unit, configured to generate the first fingerprint image by extracting image data of one or more red channels from the second original image; and
a fourth extracting unit, configured to generate the second fingerprint image by extracting image data of one or more blue channels from the third original image.

Optionally, the zone dividing module 1002 includes
a first determining unit, configured to determine a zone parameter according to a distribution pattern of bright and dark zones in red channel images and blue channel images of living fingerprints, where the zone parameter includes a plurality of zone width ratios; and
a zone dividing unit, configured to perform, according to the plurality of zone width ratios, zone division on the first fingerprint image and the second fingerprint image.

Optionally, the first fingerprint image and the second fingerprint image have a same image size, and the first determining module 1003 includes:
a second determining unit, configured to determine a first grayscale feature vector according to the plurality of first estimated bright zones and the plurality of second estimated dark zones;
a third determining unit, configured to determine a second grayscale feature vector according to the plurality of first estimated dark zones and the plurality of second estimated bright zones; and
a generating unit, configured to generate, according to the first grayscale feature vector and the second grayscale feature vector, the feature vector for multi-zone grayscale distribution.

Optionally, the second determining unit includes
a first determining sub-unit, configured to determine numbers of pixels corresponding to respective grayscale values within the plurality of first estimated bright zones, and numbers of pixels corresponding to respective grayscale values within the plurality of second estimated dark zones; and
a first generating sub-unit, configured to generate the first grayscale feature vector according to the numbers of pixels corresponding to the respective grayscale values within the plurality of first estimated bright zones and the numbers of pixels corresponding to the respective grayscale values within the plurality of second estimated dark zones.

Optionally, the third determining unit includes
a second determining sub-unit, configured to determine numbers of pixels corresponding to respective grayscale values within the plurality of first estimated dark zones, and numbers of pixels corresponding to respective grayscale values within the plurality of second estimated bright zones; and
a second generating sub-unit, configured to generate the second grayscale value feature vector according to the numbers of pixels corresponding to the respective grayscale values within the plurality of first estimated dark zones and the numbers of pixels corresponding to the respective grayscale values within the plurality of second estimated bright zones.

Optionally, the first determining module 1003 further includes
a third acquiring unit, configured to obtain a grayscale value counting range, where the grayscale value counting range is determined according to an exposure parameter of an image collecting device that collects an image of the fingerprint; and
the second determining unit includes
   a third determining sub-unit, configured to determine, according to the grayscale value counting range, numbers of pixels corresponding to respective grayscale values within the grayscale value counting range for the plurality of first estimated bright zones, and numbers of pixels corresponding to respective grayscale values within the grayscale value counting range for the plurality of second estimated dark zones; and
   a third generating sub-unit, configured to generate the first grayscale feature vector according to the numbers of pixels corresponding to the respective grayscale values within the grayscale value counting range for the plurality of first estimated bright zones and the numbers of pixels corresponding to the respective grayscale values within the grayscale value counting range for the plurality of second estimated dark zones.

Optionally, the generating unit includes
a splicing sub-unit, configured to generate, by performing splicing on the first grayscale value feature vector and the second grayscale value feature vector, the feature vector for multi-zone grayscale distribution.

Optionally, the device 1000 further includes
a second acquiring module, configured to acquire the live fingerprint sample images and the fake fingerprint sample images, where the live fingerprint sample images include sample images of a plurality of living fingerprints collected in a case that a green light is off, a red light and a blue light are on, and the fake fingerprint sample images include sample images of a plurality of non-living fingerprints collected in a case that the green light is off, the red light and the blue light are on; and
a training module, configured to obtain the fingerprint liveness detection model by performing training based on the live fingerprint sample images and the fake fingerprint sample images through supervised learning.

Optionally, referring to FIG. 11, the device 1000 further includes
a third acquiring module 1005, configure to acquire a fourth original image, where the fourth original image includes an image of the fingerprint collected in a case that a green light is on;
an identifying module 1006, configure to determine a fingerprint identification result according to the fourth original image; and
a second determining module 1007, configure to determine a security verification result according to the fingerprint identification result and the fingerprint liveness detection result.

In summary, in the embodiments of the present application, zone division can be performed on the first fingerprint image and the second fingerprint image, and a feature vector for multi-zone grayscale distribution can be determined according to the divided zones, so as to perform fingerprint liveness detection through a fingerprint liveness detection model. The first fingerprint image is a red channel image, and the second fingerprint image is a blue channel image. For a non-living one's fingerprint, a grayscale value distribution pattern for dark zones and bright zones within these two channel images is different from that of a living one's fingerprint. Therefore, through the feature vector for multi-zone grayscale distribution, whether grayscale distribution feature(s) of a living one's fingerprint exists in a fingerprint image can be determined, and further whether the fingerprint is of a living one can be determined, which is more secure.

It should be noted that while performing detection on a fingerprint, for the fingerprint liveness detection device provided in the above-mentioned embodiments, the above-mentioned division of functional modules is taken as an example for description. In practice, the above-mentioned functions can be assigned to and completed by different functional modules as needed, i.e., the internal structure of the device is divided into different functional modules to complete all or part of the functions described above. In addition, the fingerprint liveness detection device provided by the above-mentioned embodiments can belong to a same concept as fingerprint liveness detection method embodiments, and its specific implementation is detailed in the method embodiments, which is not repeated herein.

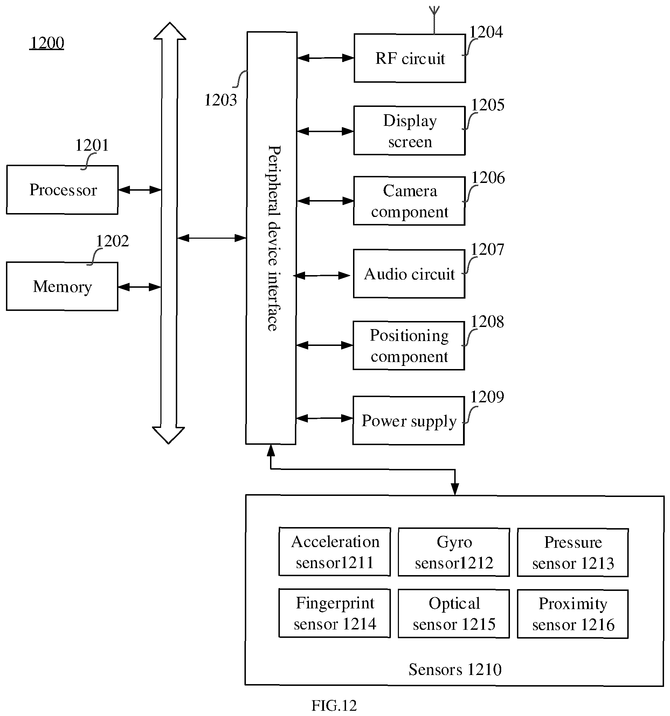

FIG. 12 is a structural schematic diagram illustrating a computer device 1200 provided by one or more embodiments of the present application. The computer device 1200 may be a fingerprint liveness detection device that can perform security verification through collecting fingerprints, such as smart phone, tablet computer, laptop computer and desktop computer or the like.

Generally, the computer device 1200 includes a processor 1201 and a memory 1202.

The processor 1201 may include one or more processing cores, for example, 4-core processor, 8-core processor etc. The processor 1201 may be implemented by at least one hardware form of Digital Signal Processing (DSP), Field - Programmable Gate Array (FPGA), and Programmable Logic Array (PLA). The processor 1201 may also include a master processor and a co-processor, where the master processor is a processor for processing data in awakened state, which is also called Central Processing Unit (CPU); the co-processor is a low power processor for processing data in a standby state. In some examples, the processor 1201 may be integrated with a Graphics Processing Unit (GPU) which is in charge of rendering and painting for contents to be displayed on a display screen. In some examples, the processor 1201 may also include an artificial intelligence (AI) processor for performing computer operations relating to machine learning.

The memory 1202 may include one or more computer readable storage mediums and the computer readable storage medium may be non-transient. The memory 1202 may also include a high speed random access memory and a non-volatile memory, for example, one or more disk storage devices and flash storage devices. In some examples, the non-transient computer readable storage medium in the memory 1202 stores at least one instruction which is executed by the processor 1201 to implement the fingerprint liveness detection method according to the above method examples of the present application.

In some examples, the computer device 1200 may further include: a peripheral device interface 1203 and at least one peripheral device. The processor 1201, the memory 1202 and the peripheral device 1203 may be connected with each other via a bus or signal line. Each peripheral device may be connected to the peripheral device interface 1203 via a bus, a signal line or a circuit board. Specifically, the peripheral device includes at least one of a radio frequency circuit 1204, a touch display screen 1205, a camera 1206, an audio circuit 1207, a positioning component 1208 and a power supply 1209.

The peripheral device interface 1203 may connect at least one peripheral device relating to Input and Output (I/O) to the processor 1201 and the memory 1202. In some examples, the processor 1201, the memory 1202 and the peripheral device interface 1203 are integrated into a same chip or circuit board; in some other examples, any one or two of the processor 1201, the memory 1202 and the peripheral device interface 1203 may be implemented on a single chip or circuit board, which is not limited herein.

The radio frequency circuit 1204 receives and sends radio frequency (RF) signals which are also called electromagnetic signals. The RF circuit 1204 communicates with a communication network or another communication device through electromagnetic signals. The RF circuit 1204 converts electrical signals into electromagnetic signals for sending, or converts received electromagnetic signals into electrical signals. In some examples, the RF circuit 1204 includes an antenna system, a RF transceiver, one or more amplifiers, a tuner, an oscillator, a digital signal processor, an encoding and decoding chip set and a user identity module card and the like. The RF circuit 1204 may communication with other terminals by at least one wireless communication protocol. The wireless communication protocol includes but is not limited to: World-Wide Web, Metropolitan Area Network, intranet, and mobile communication network of each generation (2G, 3G, 4G and 5G), wireless local area network, and/or, Wireless Fidelity (WiFi) network. In some examples, the RF circuit 1204 may further include circuits relating to Near Field Communication (NFC), which is not limited herein.

The display screen 1205 displays a user interface (UI). The UI may include graphics, text, icon, video and any combination thereof. When the display screen 1205 is a touch display screen, the display screen 1205 further has the capability to acquire touch signals on or above the surface of the display screen 1205. The touch signals may be input as control signals into the processor 1201 for processing. The display screen 1205 may also provide a virtual button and/or a virtual keyboard, which are also called soft button and/or soft keyboard. In some examples, there may be one display screen 1205 which is disposed on a front panel of the computer device 1200. In some other examples, there may be two display screens 1205 which are disposed respectively on different surfaces of the computer device 1200 or designed in a folding manner. In some examples, the display screen 1205 may be a flexible display screen which is disposed on a bending surface or a folding surface of the computer device 1200. Further, the display screen 1205 may also be disposed into irregular non-rectangular shape, i.e. special-shaped screen. The display screen 1205 may be manufactured using materials Liquid Crystal Display (LCD) and Organic Light-Emitting Diode (OLED) and the like.

The camera component 1206 acquires images or videos. In some examples, the camera component 1206 includes a front camera and a rear camera. Generally, the front camera is disposed on a front panel of the computer device 1200 and the rear camera is disposed on a backplate of the computer device 1200. In some examples, there are at least two rear cameras which are any one of a main camera, a depth-of-field camera, a wide-angle camera and a long-focus camera, so as to achieve background virtualization function of the main camera and the depth-of-field camera in a fusion manner, and achieve panorama shooting and Virtual Reality (VR) shooting function of the main camera and the wide-angle camera and other fusion shooting functions in a fusion manner. In some examples, the camera component 1206 may further include a single color temperature flashlight or a dual color temperature flashlight. The dual color temperature flash light refers to a combination of a warm light flashlight and a cold light flashlight, and may be used for light compensation under different color temperatures.

The audio circuit 1207 may include a microphone or a loudspeaker. The microphone acquires acoustic waves of user and environment and convert the acoustic waves into electrical signals and then input them into the processor 1201 for processing, or input them into the RF circuit 1204 to achieve voice communication. For the purpose of stereophonic acquisition and noise reduction, there may be a plurality of microphones to be disposed respectively at different parts of the computer device 1200. The microphone may also be an array microphone or an omni-directional acquisition microphone. The loudspeaker converts electrical signals from the processor 1201 or the RF circuit 1204 into acoustic waves. The loudspeaker may be a traditional thin film loudspeaker or a piezoelectric ceramic loudspeaker. When the loudspeaker is a piezoelectric ceramic loudspeaker, the loudspeaker can convert electrical signals into acoustic waves audible to human or convert electrical signals into acoustic waves inaudible to human for distance measurement etc. In some examples, the audio circuit 1207 may also include an earphone plughole.

The positioning component 1208 positions a current geographical location of the computer device 1200 to achieve navigation or Location Based Service (LBS). The positioning component 1208 may be a positioning component based on USA Global Positioning System, or China Beidou System or Russian Galileo System.

The power supply 1209 supplies power to various components of the computer device 1200. The power supply 1209 may be direct current, alternating current, disposable battery or chargeable battery. When the power supply 1209 includes a chargeable battery, the chargeable battery may be a wired chargeable battery or a wireless chargeable battery. The wired chargeable battery refers to a battery chargeable by a wire line and the wireless chargeable battery refers to a battery chargeable by wireless coil. The chargeable battery may also support quick charge technology.

In some examples, the computer device 1200 further includes one or more sensors 1210. The one or more sensors 1210 include but not limited to: an acceleration sensor 1211, a gyro sensor 1212, a pressure sensor 1213, a fingerprint sensor 1214, an optical sensor 1215 and a proximity sensor 1216.

The acceleration sensor 1211 may detect a size of an acceleration on three coordinate axes of a coordinate system established by the computer device 1200. For example, the acceleration sensor 1211 may detect components of a gravity acceleration on three coordinate axes. The processor 1201 may, based on gravity acceleration signals acquired by the acceleration sensor 1211, control the touch display screen 1205 to display the user interface in horizontal view or longitudinal view. The acceleration sensor 1211 may also be used for acquisition of motion data of a game or a user.

The gyro sensor 1212 may detect a body direction and a rotation angle of the computer device 1200. The gyro sensor 1212 may cooperate with the acceleration sensor 1211 to acquire 3D actions of a user for the computer device 1200. The processor 1201 may achieve the following functions based on data acquired by the gyro sensor 1212: action sensing (for example, change the UI based on an inclination operation of the user), image stabilization during shooting, game control and inertial navigation.

The pressure sensor 1213 may be disposed at a side frame of the computer device 1200 and/or a lower layer of the touch display screen 1205. When the pressure sensor 1213 is disposed at a side frame of the computer device 1200, the pressure sensor 1213 can detect a grip signal of a user for the computer device 1200, and the processor 1201 perform left and right hand recognition or quick operation based on the grip signal acquired by the pressure sensor 1213. When the pressure sensor 1213 is disposed at a lower layer of the touch display screen 1205, the processor 1201 performs control on operable controls on the UI based on pressure operations of the user on the touch display screen 1205. The operable control includes at least one of a button control, a scroll bar control, an icon control and menu control.

The fingerprint sensor 1214 acquires a fingerprint of a user and the processor 1201 recognizes an identity of the user based on the fingerprint acquired by the fingerprint sensor 1214 or the fingerprint sensor 1214 recognizes the identity of the user based on the acquired fingerprint. When the identity of the user is recognized as trustable identity, the processor 1201 authorizes the user to perform relevant sensitive operations which include unlocking screen, viewing encrypted information, downloading software, making payment and modifying settings and the like. The fingerprint sensor 1214 may be disposed on a front surface, a rear surface or a side surface of the computer device 1200. When the computer device 1200 is provided with a physical button or manufacturer logo, the fingerprint sensor 1214 may be integrated with the physical button or the manufacturer logo together.

The optical sensor 1215 acquires an environmental light intensity. In an example, the processor 1201 may control a display brightness of the touch display screen 1205 based on the environmental light intensity acquired by the optical sensor 1215. Specifically, when the environmental light intensity is high, the display brightness of the touch display screen 1205 is adjusted to higher; when the environmental light intensity is low, the display brightness of the touch display screen 1205 is adjusted to lower. In another example, the processor 1201 may dynamically adjust a shooting parameter of the camera component 1206 based on the environmental light intensity acquired by the optical sensor 1215.

The proximity sensor 1216, also called distance sensor, is usually disposed at a front panel of the computer device 1200. The proximity sensor 1216 acquires a distance between a user and a front surface of the computer device 1200. In an example, when the proximity sensor 1216 detects that the distance between the user and the front surface of the computer device 1200 gradually decreases, the processor 1201 controls the touch display screen 1205 to switch from a screen-on state to a screen-off state; when the proximity sensor 1216 detects that the distance between the user and the front surface of the computer device 1200 gradually increases, the processor 1201 controls the touch display screen 1205 to switch from a screen-off state to a screen-on state.

Those skilled in the art may understand that the structure shown in FIG. 12 does not constitute limitation to the computer device 1200 and may include more or fewer components than shown or combine some components or adopt different component arrangements.

In some embodiments, a non-volatile computer readable storage medium is further provided. The non-volatile computer readable storage medium stores a computer program, which is executed by a processor to implement steps of the fingerprint liveness detection method according to the above embodiments. For example, the non-volatile computer readable storage medium may be a read only memory (ROM), a random access memory (RAM), a CD-ROM, a magnetic tape, a floppy disk, and an optical data storage device etc.

It is to be noted that the computer readable storage medium mentioned in the embodiments of the present application may be a non-volatile storage medium, in other words, may be a non-transitory storage medium.

It is to be understood that all or some of steps for implementing the above embodiments may be implemented by software, hardware, firmware, or any combination thereof. When being implemented with software, it may be implemented in part or in whole in a form of a computer program product. The computer program product includes one or more computer instructions. The computer instructions may be stored in a computer readable storage medium as described above.

That is, in some embodiments, there is also provided a computer program product including instructions that, when being executed on a computer, cause the computer to perform the steps of the fingerprint liveness detection method described above.

## Claims

1. A fingerprint liveness detection method, comprising:
acquiring (201) a first fingerprint image and a second fingerprint image, wherein the first fingerprint image and the second fingerprint image refer to images of a same fingerprint, the first fingerprint image indicates a red channel image and the second fingerprint image indicates a blue channel image;
performing (202) zone division on the first fingerprint image and the second fingerprint image, wherein the divided first fingerprint image comprises a plurality of first estimated bright zones and a plurality of first estimated dark zones, and the divided second fingerprint image comprises a plurality of second estimated bright zones and a plurality of second estimated dark zones;
determining (203), according to the plurality of first estimated bright zones, the plurality of first estimated dark zones, the plurality of second estimated bright zones and the plurality of second estimated dark zones, a feature vector for multi-zone grayscale distribution; and
obtaining (204) a fingerprint liveness detection result by inputting the feature vector for multi-zone grayscale distribution into a fingerprint liveness detection model, wherein the fingerprint liveness detection model is trained according to live fingerprint sample images and fake fingerprint sample images through supervised learning;
the first fingerprint image and the second fingerprint image have a same image size, and the determining (203), according to the plurality of first estimated bright zones, the plurality of first estimated dark zones, the plurality of second estimated bright zones and the plurality of second estimated dark zones, the feature vector for multi-zone grayscale distribution comprises:
determining a first grayscale feature vector according to the plurality of first estimated bright zones and the plurality of second estimated dark zones;
determining a second grayscale feature vector according to the plurality of first estimated dark zones and the plurality of second estimated bright zones; and
generating, according to the first grayscale feature vector and the second grayscale feature vector, the feature vector for multi-zone grayscale distribution.

2. The method according to claim 1, wherein the acquiring (201) the first fingerprint image and the second fingerprint image comprises:
acquiring a first original image, wherein the first original image comprises an image of the fingerprint collected in a case that a green light is off and a red light and a blue light are on;
generating the first fingerprint image by extracting image data of one or more red channels from the first original image; and
generating the second fingerprint image by extracting image data of one or more blue channels from the first original image.

3. The method according to claim 1, wherein the acquiring (201) the first fingerprint image and the second fingerprint image comprises:
acquiring a second original image and a third original image, wherein the second original image comprises an image of the fingerprint collected in a case that a red light is on and a green light and a blue light are off, and the third original image comprises an image of the fingerprint collected in a case that the blue light is on and the red light and the green light are off;
generating the first fingerprint image by extracting image data of one or more red channels from the second original image; and
generating the second fingerprint image by extracting image data of one or more blue channels from the third original image.

4. The method according to claim 1, wherein the performing (202) zone division on the first fingerprint image and the second fingerprint image comprises:
determining a zone parameter according to a distribution pattern of bright and dark zones in red channel images and blue channel images of living fingerprints, wherein the zone parameter comprises a plurality of zone width ratios; and
performing, according to the plurality of zone width ratios, zone division on the first fingerprint image and the second fingerprint image.

5. The method according to any one of claims 1 to 4, wherein the determining the first grayscale feature vector according to the plurality of first estimated bright zones and the plurality of second estimated dark zones comprises:
determining numbers of pixels corresponding to respective grayscale values within the plurality of first estimated bright zones, and numbers of pixels corresponding to respective grayscale values within the plurality of second estimated dark zones; and
generating the first grayscale feature vector according to the numbers of pixels corresponding to the respective grayscale values within the plurality of first estimated bright zones and the numbers of pixels corresponding to the respective grayscale values within the plurality of second estimated dark zones.

6. The method according to any one of claims 1 to 4, wherein the determining the second grayscale feature vector according to the plurality of first estimated dark zones and the plurality of second estimated bright zones comprises:
determining numbers of pixels corresponding to respective grayscale values within the plurality of first estimated dark zones, and numbers of pixels corresponding to respective grayscale values within the plurality of second estimated bright zones; and
generating the second grayscale value feature vector according to the numbers of pixels corresponding to the respective grayscale values within the plurality of first estimated dark zones and the numbers of pixels corresponding to the respective grayscale values within the plurality of second estimated bright zones.

7. The method according to any one of claims 1 to 4, before determining the first grayscale feature vector according to the plurality of first estimated bright zones and the plurality of second estimated dark zones, the method further comprises:
obtaining a grayscale value counting range, wherein the grayscale value counting range is determined according to an exposure parameter of an image collecting device that collects an image of the fingerprint; and
the determining the first grayscale feature vector according to the plurality of first estimated bright zones and the plurality of second estimated dark zones comprises:
determining, according to the grayscale value counting range, numbers of pixels corresponding to respective grayscale values within the grayscale value counting range for the plurality of first estimated bright zones, and numbers of pixels corresponding to respective grayscale values within the grayscale value counting range for the plurality of second estimated dark zones; and
generating the first grayscale feature vector according to the numbers of pixels corresponding to the respective grayscale values within the grayscale value counting range for the plurality of first estimated bright zones and the numbers of pixels corresponding to the respective grayscale values within the grayscale value counting range for the plurality of second estimated dark zones.

8. The method according to any one of claims 1 to 4, wherein the generating, according to the first grayscale feature vector and the second grayscale feature vector, the feature vector for multi-zone grayscale distribution comprises:
generating, by performing splicing on the first grayscale value feature vector and the second grayscale value feature vector, the feature vector for multi-zone grayscale distribution.

9. The method according to any one of claims 1 to 8, before obtaining (204) the fingerprint liveness detection result by inputting the feature vector for multi-zone grayscale distribution into the fingerprint liveness detection model, the method further comprises:
acquiring the live fingerprint sample images and the fake fingerprint sample images, wherein the live fingerprint sample images comprise sample images of a plurality of living fingerprints collected in a case that a green light is off, a red light and a blue light are on, and the fake fingerprint sample images comprise sample images of a plurality of non-living fingerprints collected in a case that the green light is off, the red light and the blue light are on; and
obtaining the fingerprint liveness detection model by performing training based on the live fingerprint sample images and the fake fingerprint sample images through supervised learning.

10. The method according to any one of claims 1 to 9, further comprising:
acquiring a fourth original image, wherein the fourth original image comprises an image of the fingerprint collected in a case that a green light is on;
determining a fingerprint identification result according to the fourth original image; and
determining a security verification result according to the fingerprint identification result and the fingerprint liveness detection result.

11. A fingerprint liveness detection device (100), comprising an image collector (101) and a processor (102), wherein the image collector (101) comprises a light supplementary lamp and an image sensor;
the image collector (101) is configured to collect a first original image;
the light supplementary lamp is configured to turn off a green light and turn on a red light and a blue light to supplement light for the image sensor during collecting the first original image; and
the processor (102) is configured to:
acquire a first fingerprint image and a second fingerprint image by processing the first original image, wherein the first fingerprint image indicates a red channel image and the second fingerprint image indicates a blue channel image;
perform zone division on the first fingerprint image and the second fingerprint image, wherein the divided first fingerprint image comprises a plurality of first estimated bright zones and a plurality of first estimated dark zones, and the divided second fingerprint image comprises a plurality of second estimated bright zones and a plurality of second estimated dark zones;
determine, according to the plurality of first estimated bright zones, the plurality of first estimated dark zones, the plurality of second estimated bright zones and the plurality of second estimated dark zones, a feature vector for multi-zone grayscale distribution; and
obtain a fingerprint liveness detection result by inputting the feature vector for multi-zone grayscale distribution into a fingerprint liveness detection model, wherein the fingerprint liveness detection model is trained according to live fingerprint sample images and fake fingerprint sample images through supervised learning;
the first fingerprint image and the second fingerprint image have a same image size, and the determining, according to the plurality of first estimated bright zones, the plurality of first estimated dark zones, the plurality of second estimated bright zones and the plurality of second estimated dark zones, the feature vector for multi-zone grayscale distribution comprises:
determining a first grayscale feature vector according to the plurality of first estimated bright zones and the plurality of second estimated dark zones;
determining a second grayscale feature vector according to the plurality of first estimated dark zones and the plurality of second estimated bright zones; and
generating, according to the first grayscale feature vector and the second grayscale feature vector, the feature vector for multi-zone grayscale distribution.

12. The fingerprint liveness detection device (100) according to claim 11, wherein the processor (102) is further configured to:
acquire a first original image, wherein the first original image comprises an image of the fingerprint collected in a case that a green light is off and a red light and a blue light are on;
generate the first fingerprint image by extracting image data of one or more red channels from the first original image; and
generate the second fingerprint image by extracting image data of one or more blue channels from the first original image.

13. The fingerprint liveness detection device (100) according to claim 11, wherein
the image collector (101) is further configured to collect a fourth original image;
the light supplementary lamp is further configured to turn on the green light to supplement light for the image sensor during collecting the fourth original image; and
the processor (102) is further configured to determine a fingerprint identification result according to the fourth original image; and determine a security verification result according to the fingerprint identification result and the fingerprint liveness detection result.

14. A computer readable storage medium, **characterized in that** the computer readable storage medium stores a computer program, and the computer program is executed by a processor to implement steps of the method in any one of claims 1 to 10.

## Patentansprüche

1. Verfahren zur Erkennung von Fingerabdrucklebendigkeit, umfassend:
Erfassen (201) eines ersten Fingerabdruckbildes und eines zweiten Fingerabdruckbildes, wobei sich das erste Fingerabdruckbild und das zweite Fingerabdruckbild auf Bilder desselben Fingerabdrucks beziehen, das erste Fingerabdruckbild ein Rotkanalbild und das zweite Fingerabdruckbild ein Blaukanalbild angibt;
Durchführen (202) einer Zonenteilung an dem ersten Fingerabdruckbild und dem zweiten Fingerabdruckbild, wobei das geteilte erste Fingerabdruckbild eine Vielzahl von ersten geschätzten hellen Zonen und eine Vielzahl von ersten geschätzten dunklen Zonen umfasst, und das geteilte zweite Fingerabdruckbild eine Vielzahl von zweiten geschätzten hellen Zonen und eine Vielzahl von zweiten geschätzten dunklen Zonen umfasst;
Bestimmen (203) eines Merkmalsvektors für die Multizonen-Graustufenverteilung gemäß der Vielzahl der ersten geschätzten hellen Zonen, der Vielzahl der ersten geschätzten dunklen Zonen, der Vielzahl der zweiten geschätzten hellen Zonen und der Vielzahl der zweiten geschätzten dunklen Zonen; und
Erhalten (204) eines Fingerabdrucklebendigkeits-Erkennungsergebnisses durch Eingeben des Merkmalsvektors für die Mehrzonen-Graustufenverteilung in ein Fingerabdrucklebendigkeit-Erkennungsmodell, wobei das Fingerabdrucklebendigkeit-Erkennungsmodell gemäß echten Fingerabdruck-Beispielbildern und gefälschten Fingerabdruck-Beispielbildern durch überwachtes Lernen trainiert wird;
wobei das erste Fingerabdruckbild und das zweite Fingerabdruckbild dieselbe Bildgröße haben, und das Bestimmen (203) des Merkmalsvektors für die Mehrzonen-Graustufenverteilung gemäß der Mehrzahl von ersten geschätzten hellen Zonen, der Mehrzahl von ersten geschätzten dunklen Zonen, der Mehrzahl von zweiten geschätzten hellen Zonen und der Mehrzahl von zweiten geschätzten dunklen Zonen umfasst:
Bestimmen eines ersten Graustufen-Merkmalsvektors entsprechend der Vielzahl der ersten geschätzten hellen Zonen und der Vielzahl der zweiten geschätzten dunklen Zonen;
Bestimmen eines zweiten Graustufen-Merkmalsvektors entsprechend der Vielzahl der ersten geschätzten dunklen Zonen und der Vielzahl der zweiten geschätzten hellen Zonen; und
Erzeugen des Merkmalsvektors für die Mehrzonen-Graustufenverteilung gemäß dem ersten Graustufen-Merkmalsvektor und dem zweiten Graustufen-Merkmalsvektor.

2. Verfahren nach Anspruch 1, wobei das Erfassen (201) des ersten Fingerabdruckbildes und des zweiten Fingerabdruckbildes umfasst:
Erfassen eines ersten Originalbildes, wobei das erste Originalbild ein Bild des Fingerabdrucks umfasst, das in einem Fall gesammelt wurde, in dem ein grünes Licht ausgeschaltet ist und ein rotes Licht und ein blaues Licht eingeschaltet sind;
Erzeugen des ersten Fingerabdruckbildes durch Extrahieren von Bilddaten von einem oder mehreren roten Kanälen aus dem ersten Originalbild; und
Erzeugen des zweiten Fingerabdruckbildes durch Extrahieren von Bilddaten eines oder mehrerer blauer Kanäle aus dem ersten Originalbild.

3. Verfahren nach Anspruch 1, wobei das Erfassen (201) des ersten Fingerabdruckbildes und des zweiten Fingerabdruckbildes umfasst:
Erfassen eines zweiten Originalbildes und eines dritten Originalbildes, wobei das zweite Originalbild ein Bild des Fingerabdrucks umfasst, das in einem Fall gesammelt wurde, in dem ein rotes Licht an ist und ein grünes Licht und ein blaues Licht aus sind, und das dritte Originalbild ein Bild des Fingerabdrucks umfasst, das in einem Fall gesammelt wurde, in dem das blaue Licht an ist und das rote Licht und das grüne Licht aus sind;
Erzeugen des ersten Fingerabdruckbildes durch Extrahieren von Bilddaten von einem oder mehreren roten Kanälen aus dem zweiten Originalbild; und
Erzeugen des zweiten Fingerabdruckbildes durch Extrahieren von Bilddaten eines oder mehrerer blauer Kanäle aus dem dritten Originalbild.

4. Verfahren nach Anspruch 1, wobei das Durchführen (202) der Zonenteilung an dem ersten Fingerabdruckbild und dem zweiten Fingerabdruckbild umfasst:
Bestimmen eines Zonenparameters gemäß einem Verteilungsmuster von hellen und dunklen Zonen in Rotkanalbildern und Blaukanalbildern von lebenden Fingerabdrücken, wobei der Zonenparameter eine Vielzahl von Zonenbreitenverhältnissen umfasst; und
Durchführen einer Zonenteilung an dem ersten Fingerabdruckbild und dem zweiten Fingerabdruckbild gemäß der Vielzahl von Zonenbreitenverhältnissen.

5. Verfahren nach einem der Ansprüche 1 bis 4, wobei das Bestimmen des ersten Graustufen-Merkmalsvektors gemäß der Mehrzahl von ersten geschätzten hellen Zonen und der Mehrzahl von zweiten geschätzten dunklen Zonen umfasst:
Bestimmen der Anzahl von Pixeln, die den jeweiligen Graustufenwerten innerhalb der Vielzahl von ersten geschätzten hellen Zonen entsprechen, und der Anzahl von Pixeln, die den jeweiligen Graustufenwerten innerhalb der Vielzahl von zweiten geschätzten dunklen Zonen entsprechen; und
Erzeugen des ersten Graustufen-Merkmalsvektors gemäß der Anzahl von Pixeln, die den jeweiligen Graustufenwerten innerhalb der Vielzahl von ersten geschätzten hellen Zonen entsprechen, und der Anzahl von Pixeln, die den jeweiligen Graustufenwerten innerhalb der Vielzahl von zweiten geschätzten dunklen Zonen entsprechen.

6. Verfahren nach einem der Ansprüche 1 bis 4, wobei das Bestimmen des zweiten Graustufen-Merkmalsvektors gemäß der Vielzahl der ersten geschätzten dunklen Zonen und der Vielzahl der zweiten geschätzten hellen Zonen umfasst:
Bestimmen der Anzahl von Pixeln, die den jeweiligen Graustufenwerten innerhalb der Vielzahl der ersten geschätzten dunklen Zonen entsprechen, und der Anzahl von Pixeln, die den jeweiligen Graustufenwerten innerhalb der Vielzahl der zweiten geschätzten hellen Zonen entsprechen; und
Erzeugen des zweiten Graustufenwert-Merkmalsvektors gemäß der Anzahl von Pixeln, die den jeweiligen Graustufenwerten innerhalb der Vielzahl von ersten geschätzten dunklen Zonen entsprechen, und der Anzahl von Pixeln, die den jeweiligen Graustufenwerten innerhalb der Vielzahl von zweiten geschätzten hellen Zonen entsprechen.

7. Verfahren nach einem der Ansprüche 1 bis 4, wobei das Verfahren vor der Bestimmung des ersten Graustufen-Merkmalsvektors gemäß der Vielzahl der ersten geschätzten hellen Zonen und der Vielzahl der zweiten geschätzten dunklen Zonen ferner Folgendes umfasst:
Erhalten eines Graustufenwert-Zählbereichs, wobei der Graustufenwert-Zählbereich gemäß einem Belichtungsparameter einer Bildsammelvorrichtung bestimmt wird, die ein Bild des Fingerabdrucks sammelt; und
Bestimmen des ersten Graustufen-Merkmalsvektors gemäß der Mehrzahl von ersten geschätzten hellen Zonen und der Mehrzahl von zweiten geschätzten dunklen Zonen umfasst:
Bestimmen, entsprechend dem Graustufenwert-Zählbereich, von Anzahlen von Pixeln, die jeweiligen Graustufenwerten innerhalb des Graustufenwert-Zählbereichs für die Mehrzahl von ersten geschätzten hellen Zonen entsprechen, und von Anzahlen von Pixeln, die jeweiligen Graustufenwerten innerhalb des Graustufenwert-Zählbereichs für die Mehrzahl von zweiten geschätzten dunklen Zonen entsprechen; und
Erzeugen des ersten Graustufen-Merkmalsvektors entsprechend der Anzahl von Pixeln, die den jeweiligen Graustufenwerten innerhalb des Graustufenwert-Zählbereichs für die Vielzahl von ersten geschätzten hellen Zonen entsprechen, und der Anzahl von Pixeln, die den jeweiligen Graustufenwerten innerhalb des Graustufenwert-Zählbereichs für die Vielzahl von zweiten geschätzten dunklen Zonen entsprechen.

8. Verfahren nach einem der Ansprüche 1 bis 4, wobei das Erzeugen des Merkmalsvektors für die Mehrzonen-Graustufenverteilung gemäß dem ersten Graustufen-Merkmalsvektor und dem zweiten Graustufen-Merkmalsvektor Folgendes umfasst:
Erzeugen des Merkmalsvektors für die Mehrzonen-Graustufenverteilung durch Ausführen von Spleißen an dem ersten Graustufenwert-Merkmalsvektor und dem zweiten Graustufenwert-Merkmalsvektor.

9. Verfahren nach einem der Ansprüche 1 bis 8, wobei das Verfahren vor dem Erhalten (204) des Fingerabdrucklebendigkeit-Erkennungsergebnisses durch Eingeben des Merkmalsvektors für die Mehrzonen-Graustufenverteilung in Fingerabdrucklebendigkeit-Erkennungsmodell ferner umfasst:
Erfassen der Live-Fingerabdruck-Probenbilder und der Fake-Fingerabdruck-Probenbilder, wobei die Live-Fingerabdruck-Probenbilder Probenbilder einer Vielzahl von lebenden Fingerabdrücken umfassen, die in einem Fall gesammelt werden, in dem ein grünes Licht ausgeschaltet ist, ein rotes Licht und ein blaues Licht eingeschaltet sind, und die Fake-Fingerabdruck-Probenbilder Probenbilder einer Vielzahl von nicht lebenden Fingerabdrücken umfassen, die in einem Fall gesammelt werden, in dem das grüne Licht ausgeschaltet ist, das rote Licht und das blaue Licht eingeschaltet sind; und
Erhalten des Fingerabdrucklebendigkeit-Erkennungsmodells durch Ausführen eines Trainings auf der Grundlage der lebenden Fingerabdruck-Beispielbilder und der gefälschten Fingerabdruck-Beispielbilder durch überwachtes Lernen.

10. Verfahren nach einem der Ansprüche 1 bis 9, ferner umfassend:
Erfassen eines vierten Originalbildes, wobei das vierte Originalbild ein Bild des Fingerabdrucks umfasst, das in einem Fall gesammelt wurde, in dem ein grünes Licht eingeschaltet ist;
Bestimmen eines Fingerabdruck-Identifikationsergebnisses gemäß dem vierten Originalbild; und
Bestimmen eines Sicherheitsverifizierungsergebnisses gemäß dem Fingerabdruck-Identifikationsergebnis und dem Fingerabdrucklebendigkeit-Erkennungsergebnis.

11. Vorrichtung zur Erkennung von Fingerabdrucklebendigkeit (100), die einen Bildsammler (101) und einen Prozessor (102) umfasst, wobei der Bildsammler (101) ein Lichtergänzungslampe und einen Bildsensor umfasst;
der Bildsammler (101) konfiguriert ist, um ein erstes Originalbild zu sammeln;
das Lichtergänzungslampe ist so konfiguriert, dass es ein grünes Licht ausschaltet und ein rotes Licht und ein blaues Licht einschaltet, um das Licht für den Bildsensor während des Sammelns des ersten Originalbildes zu ergänzen; und
der Prozessor (102) so konfiguriert ist, um
ein erstes Fingerabdruckbild und ein zweites Fingerabdruckbild durch Verarbeiten des ersten Originalbildes zu erhalten, wobei das erste Fingerabdruckbild ein Rotkanalbild angibt und das zweite Fingerabdruckbild ein Blaukanalbild angibt;
eine Zonenteilung an dem ersten Fingerabdruckbild und dem zweiten Fingerabdruckbild durchzuführen, wobei das geteilte erste Fingerabdruckbild eine Vielzahl von ersten geschätzten hellen Zonen und eine Vielzahl von ersten geschätzten dunklen Zonen umfasst, und das geteilte zweite Fingerabdruckbild eine Vielzahl von zweiten geschätzten hellen Zonen und eine Vielzahl von zweiten geschätzten dunklen Zonen umfasst;
einen Merkmalsvektors für die Mehrzonen-Graustufenverteilung gemäß der Vielzahl der ersten geschätzten hellen Zonen, der Vielzahl der ersten geschätzten dunklen Zonen, der Vielzahl der zweiten geschätzten hellen Zonen und der Vielzahl der zweiten geschätzten dunklen Zonen zu bestimmen; und
ein Fingerabdrucklebendigkeit-Erkennungsergebnis durch Eingeben des Merkmalsvektors für die Mehrzonen-Graustufenverteilung in ein Fingerabdrucklebendigkeit-Erkennungsmodell erhalten, wobei das Fingerabdrucklebendigkeit-Erkennungsmodell gemäß echten Fingerabdruckprobenbildern und gefälschten Fingerabdruckprobenbildern durch überwachtes Lernen trainiert wird;
wobei das erste Fingerabdruckbild und das zweite Fingerabdruckbild die gleiche Bildgröße haben, und das Bestimmen des Merkmalsvektors für die Mehrzonen-Graustufenverteilung gemäß der Vielzahl der ersten geschätzten hellen Zonen, der Vielzahl der ersten geschätzten dunklen Zonen, der Vielzahl der zweiten geschätzten hellen Zonen und der Vielzahl der zweiten geschätzten dunklen Zonen umfasst:
Bestimmen eines ersten Graustufen-Merkmalsvektors entsprechend der Vielzahl der ersten geschätzten hellen Zonen und der Vielzahl der zweiten geschätzten dunklen Zonen;
Bestimmen eines zweiten Graustufen-Merkmalsvektors entsprechend der Vielzahl der ersten geschätzten dunklen Zonen und der Vielzahl der zweiten geschätzten hellen Zonen; und
Erzeugen des Merkmalsvektors für die Mehrzonen-Graustufenverteilung gemäß dem ersten Graustufen-Merkmalsvektor und dem zweiten Graustufen-Merkmalsvektor,.

12. Vorrichtung zur Erkennung von Fingerabdrucklebendigkeit (100) nach Anspruch 11, wobei der Prozessor (102) weiterhin konfiguriert ist, um:
ein erstes Originalbild zu erfassen, wobei das erste Originalbild ein Bild des Fingerabdrucks umfasst, das in einem Fall gesammelt wurde, in dem ein grünes Licht ausgeschaltet ist und ein rotes Licht und ein blaues Licht eingeschaltet sind;
das erste Fingerabdruckbildes durch Extrahieren von Bilddaten von einem oder mehreren roten Kanälen aus dem ersten Originalbild zu erzeugen; und
das zweiten Fingerabdruckbildes durch Extrahieren von Bilddaten eines oder mehrerer blauer Kanäle aus dem ersten Originalbild zu erzeugen.

13. Vorrichtung zur Erkennung von Fingerabdrucklebendigkeit (100) nach Anspruch 11, wobei
der Bildsammler (101) ferner konfiguriert ist, um ein viertes Originalbild zu sammeln;
die Lichtergänzungslampe ferner so konfiguriert ist, dass es das grüne Licht einschaltet, um das Licht für den Bildsensor während des Sammelns des vierten Originalbildes zu ergänzen; und
der Prozessor (102) ferner konfiguriert ist, um ein Fingerabdruck-Identifikationsergebnis gemäß dem vierten Originalbild zu bestimmen; und ein Sicherheitsverifizierungsergebnis gemäß dem Fingerabdruck-Identifikationsergebnis und dem Fingerabdrucklebendigkeit-Erkennungsergebnis zu bestimmen.

14. Ein computerlesbares Speichermedium, **dadurch gekennzeichnet, dass** das computerlesbare Speichermedium ein Computerprogramm speichert, und das Computerprogramm von einem Prozessor ausgeführt wird, um Schritte des Verfahrens nach einem der Ansprüche 1 bis 10 zu implementieren.

## Revendications

1. Procédé de détection de caractère vivant des empreintes digitales, comprenant :
acquérir (201) une première image d'empreintes digitales et une deuxième image d'empreintes digitales, dans lequel la première image d'empreintes digitales et la deuxième image d'empreintes digitales se réfèrent aux images de mêmes empreintes digitales, la première image d'empreintes digitales indique une image de canal rouge et la deuxième image d'empreintes digitales indique une image de canal bleu ;
mettre en œuvre (202) une division de zone sur la première image d'empreintes digitales et la deuxième image d'empreintes digitales, dans lequel la première image d'empreintes digitales divisée comprend une pluralité de premières zones lumineuses estimées et une pluralité de premières zones sombres estimées, et la deuxième image d'empreintes digitales divisée comprend une pluralité de deuxièmes zones lumineuses estimées et une pluralité de deuxièmes zones sombres estimées ;
déterminer (203), en fonction de la pluralité de premières zones lumineuses estimées, de la pluralité de premières zones sombres estimées, de la pluralité de deuxièmes zones lumineuses estimées et de la pluralité de deuxièmes zones sombres estimées, un vecteur de caractéristiques pour une distribution de niveaux de gris multizone ; et
obtenir (204) un résultat de détection de caractère vivant d'empreintes digitales en entrant le vecteur de caractéristiques pour une distribution de niveaux de gris multizone dans un modèle de détection de caractère vivant d'empreintes digitales, dans lequel le modèle de détection de caractère vivant d'empreintes digitales est formé en fonction d'images d'échantillons d'empreintes digitales vivantes et d'images d'échantillons de fausses empreintes digitales via un apprentissage supervisé ;
la première image d'empreintes digitales et la deuxième image d'empreintes digitales sont de taille d'image identique, et déterminer (203), en fonction de la pluralité de premières zones lumineuses estimées, de la pluralité de premières zones sombres estimées, de la pluralité de deuxièmes zones lumineuses estimées et de la pluralité de deuxièmes zones sombres estimées, un vecteur de caractéristiques pour une distribution de niveaux de gris multizone comprend :
déterminer un premier vecteur de caractéristiques de niveaux de gris en fonction de la pluralité de premières zones lumineuses estimées et de la pluralité de deuxièmes zones sombres estimées ;
déterminer un deuxième vecteur de caractéristiques de niveaux de gris en fonction de la pluralité de premières zones sombres estimées et de la pluralité de deuxièmes zones lumineuses estimées ; et
générer, en fonction du premier vecteur de caractéristiques de niveaux de gris et du deuxième vecteur de caractéristiques de niveaux de gris, le vecteur de caractéristiques pour une distribution de niveaux de gris multizone.

2. Procédé selon la revendication 1, dans lequel acquérir (201) la première image d'empreintes digitales et la deuxième image d'empreintes digitales comprend :
acquérir une première image originale, dans lequel la première image originale comprend une image des empreintes digitales collectées dans un cas où une lumière verte est éteinte et une lumière rouge et une lumière bleue sont allumées ;
générer la première image d'empreintes digitales en extrayant les données d'image d'un ou de plusieurs canaux rouges de la première image originale ; et
générer la deuxième image d'empreintes digitales en extrayant les données d'image d'un ou de plusieurs canaux bleus de la première image originale.

3. Procédé selon la revendication 1, dans lequel acquérir (201) la première image d'empreintes digitales et la deuxième image d'empreintes digitales comprend :
acquérir une deuxième image originale et une troisième image originale, dans lequel la deuxième image originale comprend une image des empreintes digitales collectées dans un cas où une lumière rouge est allumée et une lumière verte et une lumière bleue sont éteintes, et la troisième image originale comprend une image des empreintes digitales collectées dans un cas où la lumière bleue est allumée et la lumière rouge et la lumière verte sont éteintes ;
générer la première image d'empreintes digitales en extrayant les données d'image d'un ou de plusieurs canaux rouges de la deuxième image originale ; et
générer la deuxième image d'empreintes digitales en extrayant les données d'image d'un ou de plusieurs canaux bleus de la troisième image originale.

4. Procédé selon la revendication 1, dans lequel mettre en œuvre (202) une division de zone sur la première image d'empreintes digitales et la deuxième image d'empreintes digitales comprend :
déterminer des paramètres de zone en fonction d'un motif de distribution des zones lumineuses et sombres dans des images de canal rouge et des images de canal bleu d'empreintes digitales vivantes, dans lequel les paramètres de zone comprennent une pluralité de rapports de largeur de zones ; et
mettre en œuvre, en fonction de la pluralité de rapports de largeur de zones, une division de zone sur la première image d'empreintes digitales et la deuxième image d'empreintes digitales.

5. Procédé selon l'une quelconque des revendications 1 à 4, dans lequel déterminer un premier vecteur de caractéristiques de niveaux de gris en fonction de la pluralité de premières zones lumineuses estimées et de la pluralité de deuxièmes zones sombres estimées comprend :
déterminer le nombre de pixels correspondant aux valeurs de niveaux de gris respectives dans la pluralité de premières zones lumineuses estimées, et le nombre de pixels correspondant aux valeurs de niveaux de gris respectives dans la pluralité de deuxièmes zones sombres estimées ; et
générer le premier vecteur de caractéristiques de niveaux de gris en fonction du nombre de pixels correspondant aux valeurs de niveaux de gris respectives dans la pluralité de premières zones lumineuses estimées, et du nombre de pixels correspondant aux valeurs de niveaux de gris respectives dans la pluralité de deuxièmes zones sombres estimées.

6. Procédé selon l'une quelconque des revendications 1 à 4, dans lequel déterminer le deuxième vecteur de caractéristiques de niveaux de gris en fonction de la pluralité de premières zones sombres estimées et la pluralité de deuxièmes zones lumineuses estimées comprend :
déterminer le nombre de pixels correspondant aux valeurs de niveaux de gris respectives dans la pluralité de premières zones sombres estimées, et le nombre de pixels correspondant aux valeurs de niveaux de gris respectives dans la pluralité de deuxièmes zones lumineuses estimées ; et
générer le deuxième vecteur de caractéristiques de valeur de niveaux de gris en fonction du nombre de pixels correspondant aux valeurs de niveaux de gris respectives dans la pluralité de premières zones sombres estimées et du nombre de pixels correspondant aux valeurs de niveaux de gris respectives dans la pluralité de deuxièmes zones lumineuses estimées.

7. Procédé selon l'une quelconque des revendications 1 à 4, avant de déterminer le premier vecteur de caractéristiques de niveaux de gris en fonction de la pluralité de premières zones lumineuses estimées, et de la pluralité de deuxièmes zones sombres estimées, le procédé comprend en outre :
obtenir une plage de comptage de valeur de niveaux de gris, dans lequel la plage de comptage de valeur de niveaux de gris est déterminée en fonction d'un paramètre d'exposition d'un dispositif de collecte d'image qui collecte une image des empreintes digitales ; et
déterminer le premier vecteur de caractéristiques de niveaux de gris en fonction de la pluralité de premières zones lumineuses estimées et de la pluralité de deuxièmes zones sombres estimées comprend :
déterminer, en fonction de la plage de comptage de valeur de niveaux de gris, les nombres de pixels correspondant aux valeurs de niveaux de gris respectives dans la plage de comptage de valeur de niveaux de gris pour la pluralité de premières zones lumineuses estimées, et les nombres de pixels correspondant aux valeurs de niveaux de gris respectives dans la plage de comptage de valeur de niveaux de gris pour la pluralité de deuxièmes zones sombres estimées ; et
générer le premier vecteur de caractéristiques de niveaux de gris en fonction des nombres de pixels correspondant aux valeurs de niveaux de gris respectives dans la plage de comptage de valeur de niveaux de gris pour la pluralité de premières zones lumineuses estimées et des nombres de pixels correspondant aux valeurs de niveaux de gris respectives dans la plage de comptage de valeur de niveaux de gris pour la pluralité de deuxièmes zones sombres estimées.

8. Procédé selon l'une quelconque des revendications 1 à 4, dans lequel générer, en fonction du premier vecteur de caractéristiques de niveaux de gris et du deuxième vecteur de caractéristiques de niveaux de gris, vecteur de caractéristiques pour la distribution de niveaux de gris multizone comprend :
générer, en mettant en œuvre un raccordement sur le premier vecteur de caractéristiques de niveaux de gris et le deuxième vecteur de caractéristiques de niveaux de gris, le vecteur de caractéristiques pour la distribution de niveaux de gris multizone.

9. Procédé selon l'une quelconque des revendications 1 à 8, avant d'obtenir (204) le résultat de détection de caractère vivant d'empreintes digitales en entrant le vecteur de caractéristiques pour une distribution de niveaux de gris multizone dans le modèle de détection de caractère vivant d'empreintes digitales, le procédé comprend en outre :
acquérir les images d'échantillons d'empreintes digitales vivantes et les images d'échantillons de fausses empreintes digitales, dans lequel les images d'échantillons d'empreintes digitales vivantes comprennent des images d'échantillons d'une pluralité d'empreintes digitales vivantes collectées dans un cas où une lumière verte est éteinte, et une lumière rouge et une lumière bleue sont allumées, et les images d'échantillons de fausses empreintes digitales d'une pluralité d'empreintes digitales non-vivantes collectées dans un cas où la lumière verte est éteinte et la lumière rouge et la lumière bleue sont allumées ; et
obtenir le modèle de détection de caractère vivant d'empreintes digitales en mettant en œuvre une formation basée sur les images d'échantillons d'empreintes digitales vivantes et les images d'échantillons de fausses empreintes digitales via un apprentissage supervisé.

10. Procédé selon l'une quelconque des revendications 1 à 9, comprenant en outre :
acquérir une quatrième image originale, dans lequel la quatrième image originale comprend une image des empreintes digitales collectées dans un cas où la lumière verte est allumée ;
déterminer un résultat d'identification d'empreintes digitales en fonction de la quatrième image originale ; et
déterminer un résultat de vérification de sécurité en fonction du résultat d'identification d'empreintes digitales et du résultat de détection de caractère vivant d'empreintes digitales.

11. Dispositif de détection de caractère vivant d'empreintes digitales (100), comprenant un collecteur d'image (101) et un processeur (102), dans lequel le collecteur d'image (101) comprend une lampe de complément de lumière et un capteur d'image ;
le collecteur d'image (101) est configuré pour collecter une première image originale ;
la lampe de complément de lumière est configurée pour éteindre une lumière verte et allumer une lumière rouge et une lumière bleue en complément de lumière pour le capteur d'image durant la collecte de la première image originale ; et
le processeur (102) est configuré pour :
acquérir une première image d'empreintes digitales et une deuxième image d'empreintes digitales en traitant la première image originale, dans lequel la première image d'empreintes digitales indique une image de canal rouge et la et la deuxième image d'empreintes digitales indique une image de canal bleu ;
mettre en œuvre une division de zone sur la première image d'empreintes digitales et la deuxième image d'empreintes digitales, dans lequel la première image d'empreintes digitales divisée comprend une pluralité de premières zones lumineuses estimées et une pluralité de premières zones sombres estimées, et la deuxième image d'empreintes digitales divisée comprend une pluralité de deuxièmes zones lumineuses estimées et une pluralité de deuxièmes zones sombres estimées ;
déterminer, en fonction de la pluralité de premières zones lumineuses estimées, de la pluralité de premières zones sombres estimées, de la pluralité de deuxièmes zones lumineuses estimées et de la pluralité de deuxièmes zones sombres estimées, un vecteur de caractéristiques pour une distribution de niveaux de gris multizone ; et
obtenir un résultat de détection de caractère vivant d'empreintes digitales en entrant le vecteur de caractéristiques pour une distribution de niveaux de gris multizone dans un modèle de détection de caractère vivant d'empreintes digitales, dans lequel le modèle de détection de caractère vivant d'empreintes digitales est formé en fonction d'images d'échantillons d'empreintes digitales vivantes et d'images d'échantillons de fausses empreintes digitales via un apprentissage supervisé ;
la première image d'empreintes digitales et la deuxième image d'empreintes digitales sont de taille d'image identique, et déterminer, en fonction de la pluralité de premières zones lumineuses estimées, de la pluralité de premières zones sombres estimées, de la pluralité de deuxièmes zones lumineuses estimées et de la pluralité de deuxièmes zones sombres estimées, un vecteur de caractéristiques pour une distribution de niveaux de gris multizone comprend :
déterminer un premier vecteur de caractéristiques de niveaux de gris en fonction de la pluralité de premières zones lumineuses estimées et de la pluralité de deuxièmes zones sombres estimées ;
déterminer un deuxième vecteur de caractéristiques de niveaux de gris en fonction de la pluralité de premières zones sombres estimées et de la pluralité de deuxièmes zones lumineuses estimées ; et
générer, en fonction du premier vecteur de caractéristiques de niveaux de gris et du deuxième vecteur de caractéristiques de niveaux de gris, le vecteur de caractéristiques pour une distribution de niveaux de gris multizone.

12. Dispositif de détection de caractère vivant d'empreintes digitales (100) selon la revendication 11, dans lequel le processeur (102) est en outre configuré pour :
acquérir une première image originale, dans lequel la première image originale comprend une image des empreintes digitales collectées dans un cas où une lumière verte est éteinte et une lumière rouge et une lumière bleue sont allumées ;
générer la première image d'empreintes digitales en extrayant les données d'image d'un ou de plusieurs canaux rouges de la première image originale ; et
générer la deuxième image d'empreintes digitales en extrayant les données d'image d'un ou de plusieurs canaux bleus de la première image originale.

13. Dispositif de détection de caractère vivant d'empreintes digitales (100) selon la revendication 11, dans lequel
le collecteur d'image (101) est en outre configuré pour collecter une quatrième image originale ;
la lampe de complément de lumière est en outre configurée pour allumer la lumière verte en complément de lumière pour le capteur d'image durant la collecte de la quatrième image originale ; et
le processeur (102) est en outre configuré pour déterminer un résultat d'identification d'empreintes digitales en fonction de la quatrième image originale ; et déterminer un résultat de vérification de sécurité en fonction du résultat d'identification d'empreintes digitales et du résultat de détection de caractère vivant d'empreintes digitales.

14. Support de stockage lisible par ordinateur, **caractérisé en ce que** le support de stockage lisible par ordinateur stocke un programme informatique, et le programme informatique est exécuté par un processeur afin de mettre en œuvre les étapes du procédé selon l'une quelconque des revendications 1 à 10.
